# EUROPEAN PATENT APPLICATION

(11) **EP 4 764 294 A1**
(43) Date of publication of application: **24.06.2026**
(21) Application number: 25214487.8
(22) Date of filing: 10.11.2025
(51) Int. Cl.: F16M 11/42, F16M 11/06, F16M 11/20, H04N 5/64

(54) **DISPLAY DEVICE**

(30) Priority: 20.12.2024 KR 20240192370
(71) Applicant: LG Electronics Inc., Yeongdeungpo-gu Seoul 07336 (KR)
(72) Inventor: LEE, Kangyeung, Seoul (KR); KIM, Jingyu, Seoul (KR); JUNG, Hyunjin, Seoul (KR)
(74) Representative: Vossius & Partner Patentanwälte Rechtsanwälte mbB

(57) **Abstract**

A display device (1) comprising: a display (10); and a stand (S) including a base (20) and a pole (30) which is coupled to the base (20), and supporting the display (10), wherein the base (20) comprises: a case (20C); a first plate (21) positioned inside the case (20C) and including a slot (210S); a substrate (20P) positioned at the first plate (21); and a second plate (22) positioned inside the case (20C) and covering the substrate (20P).

## Description

### CROSS-REFERENCE TO RELATED APPLICATION

This application claims the priority benefit of Korean Patent Application No. 10-2024-0192370, filed on December 20, 2024, the disclosure of which is incorporated herein by reference.

### BACKGROUND OF THE INVENTION

### Field of the invention

The present disclosure relates to a display device.

### Description of the Related Art

With the development of information society, there has been a growing demand for various types of display devices. In order to meet such demand, various display devices, such as a liquid crystal display (LCD) device, a plasma display panel (PDP), an electro luminescent display (ELD), a vacuum fluorescent display (VFD), an organic light emitting diode (OLED) display, and the like, have been developed and used.

Among them, an LCD panel includes a TFT substrate and a color substrate that are opposite each other with a liquid crystal layer interposed therebetween to display an image using light provided from a backlight unit. In addition, an OLED panel can display an image by depositing a self-luminescent organic layer on a substrate having a transparent electrode formed thereon.

Recently, numerous research has been conducted on a structure for freely adjusting the angle or position of a display.

### SUMMARY OF THE INVENTION

It is an object of the present disclosure to solve the above and other problems.

Another object of the present disclosure may be to provide a display device including a stand for supporting a display.

Another object of the present disclosure may be to provide a structure of a base of a stand.

Another object of the present disclosure may be to provide a structure for protecting a substrate of a base from external impact.

Another object of the present disclosure may be to provide a structure for minimizing Electromagnetic Interference (EMI) of a substrate of a base.

Another object of the present disclosure may be to provide a coupling structure of a pole of a stand and a base.

Another object of the present disclosure may be to provide a coupling structure of a top connector of a pole and a bottom connector of a base.

Another object of the present disclosure may be to provide a cable routing structure of a bracket on which a bottom connector is mounted.

Another object of the present disclosure may be to provide a coupling structure of a top connector and a top bracket.

In accordance with an aspect of the present disclosure for achieving the above and other objectives, a display device may include: a display; and a stand including a base and a pole which is coupled to the base, and supporting the display, wherein the base may include: a case; a first plate positioned inside the case and including a slot; a substrate positioned at the first plate; and a second plate positioned inside the case and covering the substrate.

### BRIEF DESCRIPTION OF THE DRAWINGS

The above and other objects, features and advantages of the present invention will be more apparent from the following detailed description in conjunction with the accompanying drawings, in which:

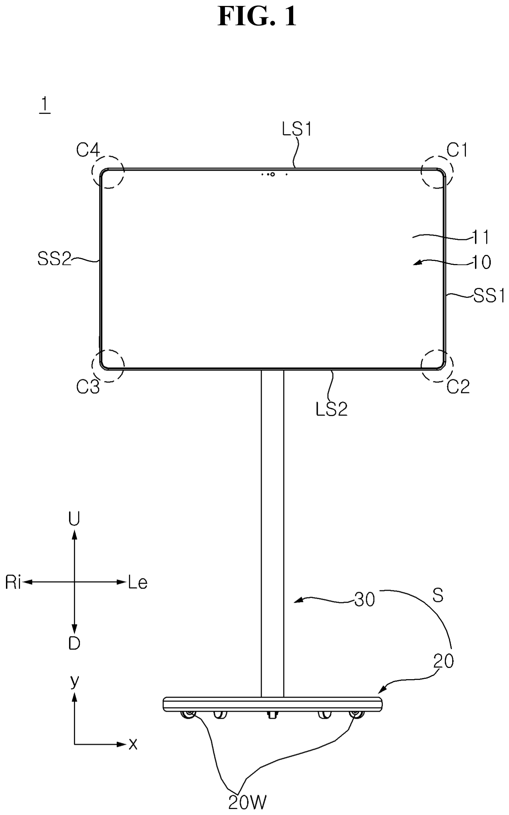

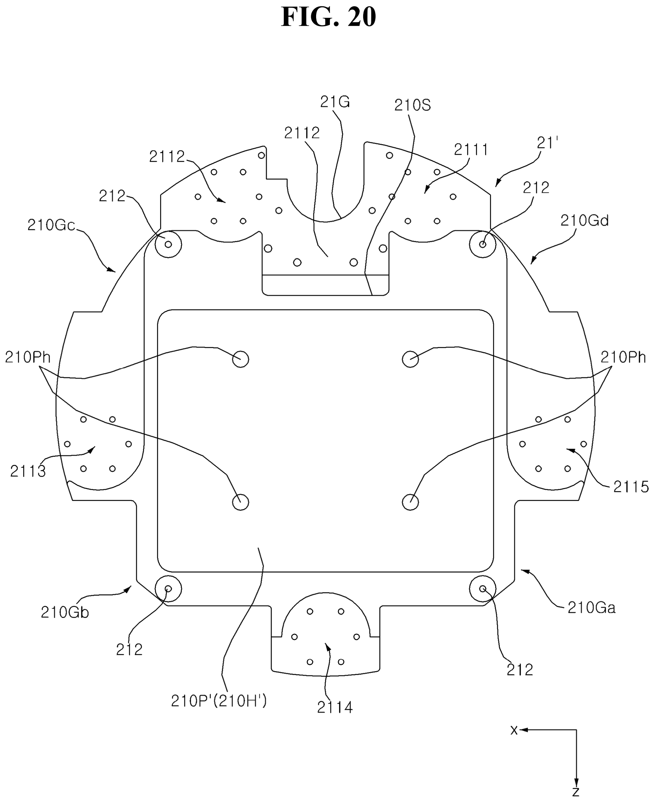

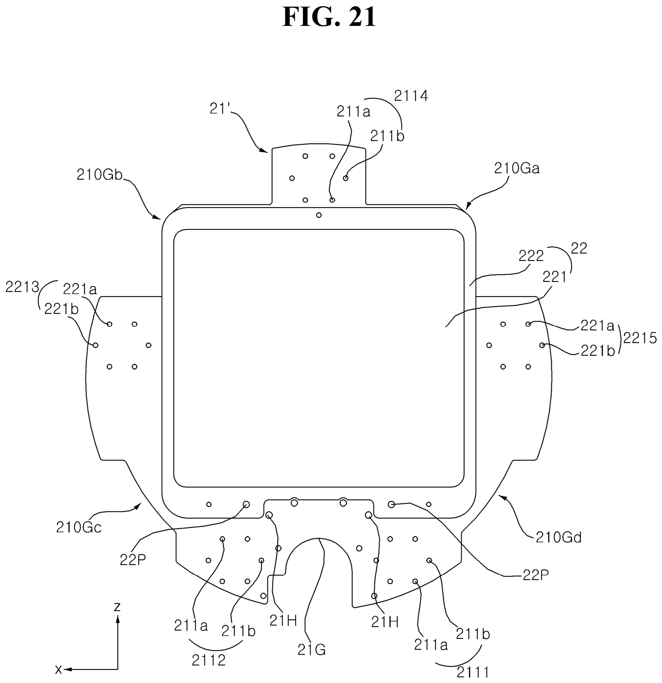

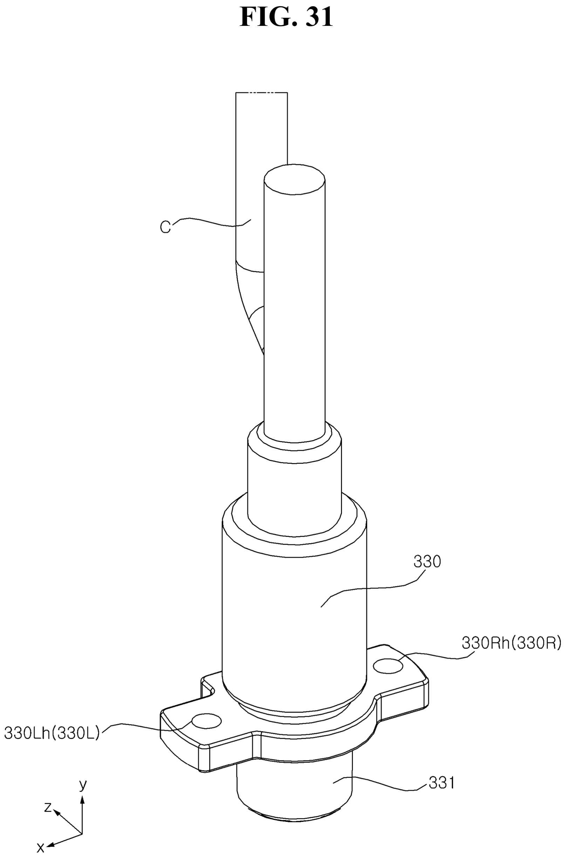

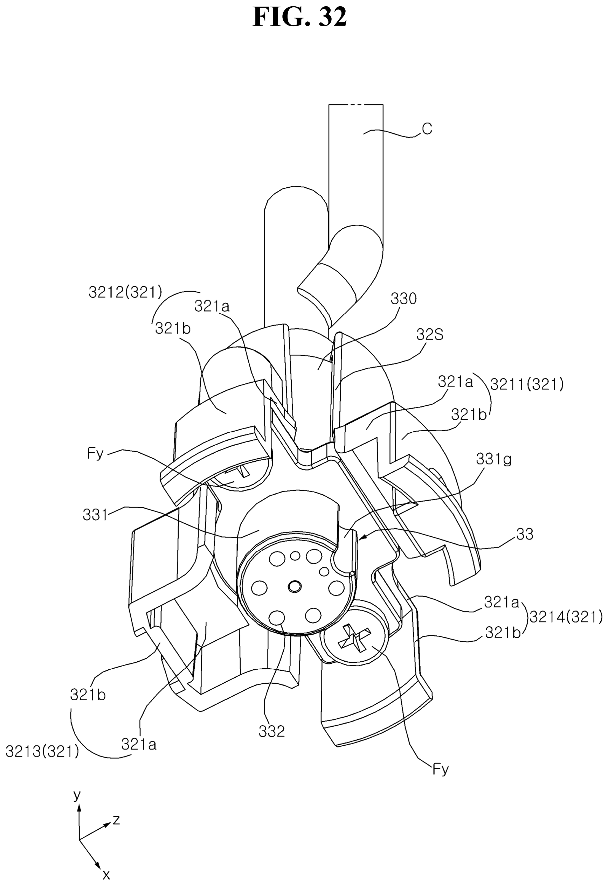

FIGS. 1 to 39 are diagrams illustrating examples of a display device according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand various technical features and it should be understood that the embodiments disclosed herein are not limited by the accompanying drawings. As such, the present disclosure should be construed to extend to any alterations, equivalents, and substitutes in addition to those which are particularly set out in the accompanying drawings.

Although the terms "first", "second", etc. may be used herein to describe various elements, these elements should not be limited by these terms. These terms are only used to distinguish one element from another.

When an element is referred to as being "coupled", "fixed", "mounted", "connected" or "linked" to another element, intervening elements may also be present. In contrast, when an element is referred to as being "directly coupled", "directly fixed", "directly mounted", "directly connected" or "directly linked" to another element, there are no intervening elements present.

A singular representation may include a plural representation unless the context clearly indicates otherwise.

Terms such as "comprises or includes" or "has" are used herein and should be understood that they are intended to indicate an existence of features, numbers, steps, operations, elements, components, or combinations thereof, disclosed in the specification, but do not preclude the presence or addition of one or more other features, numbers, steps, operations, elements, components, or combinations thereof.

The directions "up (U)", "down (D)", "left (Le)", "right (Ri)", "front (F)", and "rear (R)" shown in the drawings are used only for convenience of description, and the technical concept disclosed in this specification is not limited by these directions.

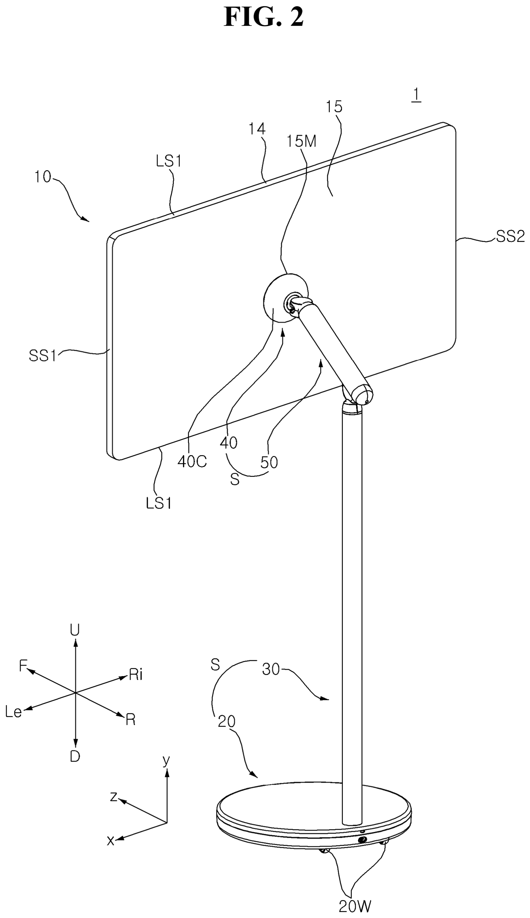

Referring to FIGS. 1 and 2, a display device 1 may include a display 10. The display 10 may include a display panel 11 to display an image. The image may be displayed on a front surface of the display panel 11. The display 10 may be referred to as a display unit 10 or a head 10.

The display 10 may include a first long side LS1, a second long side LS2 opposite the first long side LS1, a first short side SS1 adjacent to the first long side LS1 and the second long side LS2, and a second short side SS2 opposite the first short side SS1. Meanwhile, for ease of explanation, it is illustrated and described that lengths of the first and second long sides LS1 and LS2 are greater than lengths of the first and second short sides SS1 and SS2, but the lengths of the first and second long sides LS1 and LS2 may be substantially equal to the lengths of the first and second short sides SS1 and SS2.

A direction parallel to the short sides SS1 and SS2 of the display 10 may be referred to as an up-and-down direction. A direction parallel to the long sides LS1 and LS2 of the display 10 may be referred to as a left-and-right direction. A direction perpendicular to the short sides SS1 and SS2 and the long sides LS1 and LS2 of the display 10 may be referred to as a front-and-rear direction.

A direction in which the display 10 displays an image may be referred to as a front (F, z), and a direction opposite to the front may be referred to as a rear (R). The first short side SS1 may be referred to as a left side (Le, x). The second short side SS2 may be referred to as a right side (Ri). The first long side LS1 may be referred to as an upper side (U, y). The second long side LS2 may be referred to as a lower side (D).

The first long side LS1, the second long side LS2, the first short side SS1, and the second short side SS2 may be referred to as edges of the display 10. Points where the first long side LS1, the second long side LS2, the first short side SS1, and the second short side SS2 meet one another may be referred to as corners. A point where the first long side LS1 and the first short side SS1 meet may be referred to as a first corner C1. A point where the first short side SS1 and the second long side LS2 meet may be referred to as a second corner C2. A point where the second long side LS2 and the second short side SS2 meet may be referred to as a third corner C3. A point where the second short side SS2 and the first long side LS1 meet may be referred to as a fourth corner C4.

A stand S may support the display 10. The stand S of the display device 1 may be placed on a surface (e.g., a floor, the ground, etc.), thereby allowing the display 10 of the display device 1 to be spaced apart from the surface. The stand S may include a base 20, a pole 30, a connector 40, and a support arm 50.

The base 20 may be placed on a surface. The base 20 may be rounded or angled. A plurality of wheels 20W may be mounted to the base 20. The base 20 may be referred to as a moving base 20.

The pole 30 may extend from the base 20. A longitudinal direction of the pole 30 may be parallel to the vertical direction. A lower end of the pole 30 may be coupled to the base 20 while being adjacent to a periphery of the base 20.

The support arm 50 may extend in a direction intersecting the pole 30. The support arm 50 may be coupled to the pole 30 while being adjacent to an upper end of the pole 30. The connector 40 may be disposed between the display 10 and the pole 30, and may be coupled to the display 10 and the pole 30.

Accordingly, the display 10 may be supported by the stand S, and may be spaced apart from the surface on which the base 20 is placed.

Meanwhile, a battery (not shown) may be embedded in at least one of the base 20, the pole 30, the support arm 50, or the display 10. The display device 1 may be driven by power supplied from the battery.

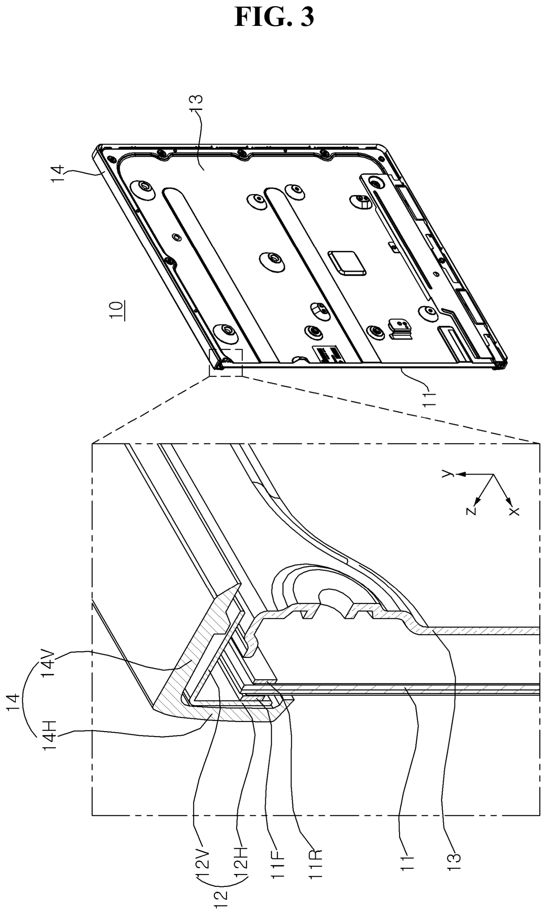

Referring to FIG. 3, the display 10 may include a display panel 11, a middle cabinet 12, a frame 13, a side frame 14, and a back cover 15 (see FIG. 2).

The display panel 11 may define a front surface of the display 10. For example, the display panel 11 may be a liquid crystal display (LCD) panel, an organic light emitting diode (OLED) panel, or a light emitting diode (LED) panel. The display panel 11 may include a plurality of pixels to output an image in accordance with color, brightness, and chroma of each pixel. The display panel 11 may be divided into an active area in which an image is displayed and a de-active area in which no image is displayed. The display panel 11 may generate light corresponding to red, green or blue color in response to a control signal.

The middle cabinet 12 may extend along an edge of the display panel 11. A horizontal portion 12H may be positioned at the front of the display panel 11. A vertical portion 12V may intersect the horizontal portion 12H, and may cover a side surface of the display panel 11. In some embodiments, the middle cabinet 12 may be omitted.

The frame 13 may be positioned behind the display panel 11. Electronic components such as a printed circuit board (PCB) may be mounted on the frame 13. For example, a power supply board, a timing controller board, and a main board may be coupled to the rear of the frame 13.

The side frame 14 may extend along an edge of the frame 13. The side frame 14 may define an edge of the display 10. A horizontal portion 14H may be positioned at the front of the horizontal portion 12H of the middle cabinet 12. A vertical portion 14V may cover the vertical portion 12V of the middle cabinet 12.

The back cover 15 may define a rear surface of the display 10. The back cover 15 may cover the rear of the frame 13, and may be coupled to the frame 13.

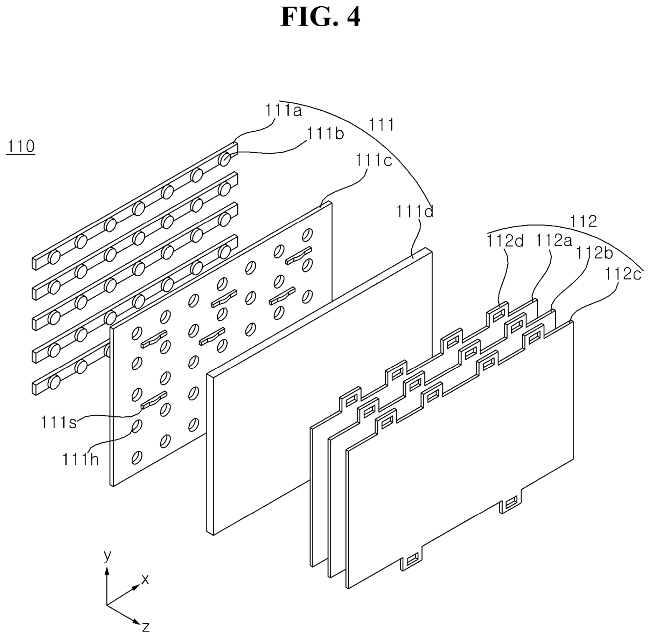

Referring to FIGS. 3 and 4, a backlight unit 110 may be disposed between the display panel 11 and the frame 13, and may be coupled to the frame 13. The display panel 11 may be referred to as an LCD panel 11. The backlight unit 110 may include an optical layer 111 and an optical sheet 112.

The optical layer 111 may include a substrate 111a, at least one light source 111b such as a light emitting diode (LED), a reflective sheet 111c, and a diffusion plate 111d. The reflective sheet 111c may include a hole 111h in which the light source 111b is positioned. The diffusion plate 111d may be positioned at the front of the reflective sheet 111c. A spacer 111s may support a rear surface of the diffusion plate 111d between the reflective sheet 111c and the diffusion plate 111d.

The optical sheet 112 may be positioned at the front of the diffusion plate 111d. The optical sheet 112 may include at least one of a diffusion sheet or a prism sheet.

Accordingly, light from the light source 111b may be provided to the display panel 11 through the diffusion plate 111d and the optical sheet 112. Meanwhile, the display panel 11 of the present disclosure may be an OLED panel that does not require the backlight unit 110 described above or another type of panel.

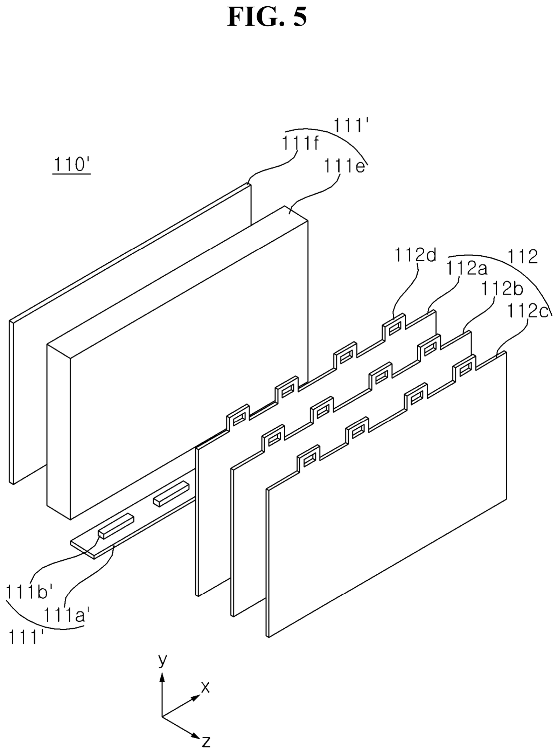

Referring to FIGS. 3 and 5, a backlight unit 110' may be disposed between the display panel 11 and the frame 13, and may be coupled to the frame 13. The display panel 11 may be referred to as an LCD panel 11. The backlight unit 110' may include an optical layer 111' and an optical sheet 112.

The optical layer 111' may include a substrate 111a', at least one light source 111b' such as a light emitting diode (LED), a reflective sheet 111f, and a light guide plate 111e. The light guide plate 111e may be disposed between the frame 13 and the optical sheet 112, and may be supported by the frame 13. The reflective sheet 111f may be disposed between the frame 13 and the light guide plate 111e, and may be supported by the frame 13.

Accordingly, light from the light source 111b' may be provided to the display panel 11 through the light guide plate 111e and the optical sheet 112. Meanwhile, the display panel 11 of the present disclosure may be an OLED panel that does not require the backlight unit 110' described above or another type of panel.

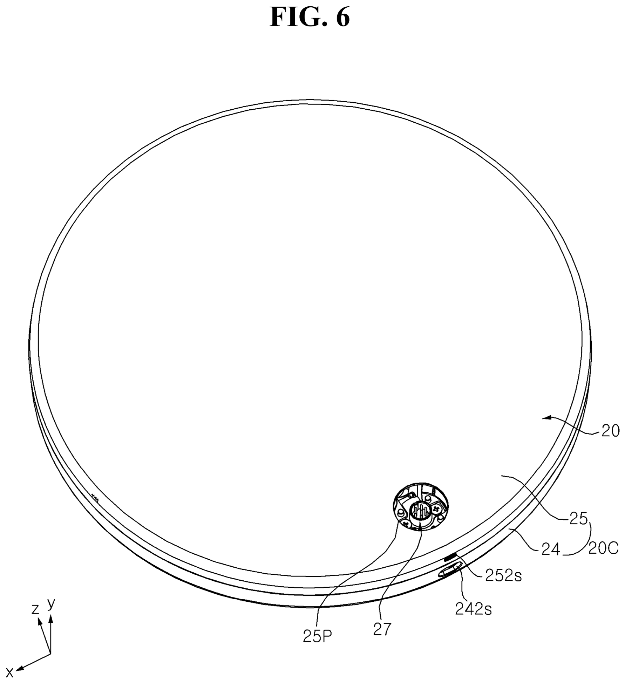

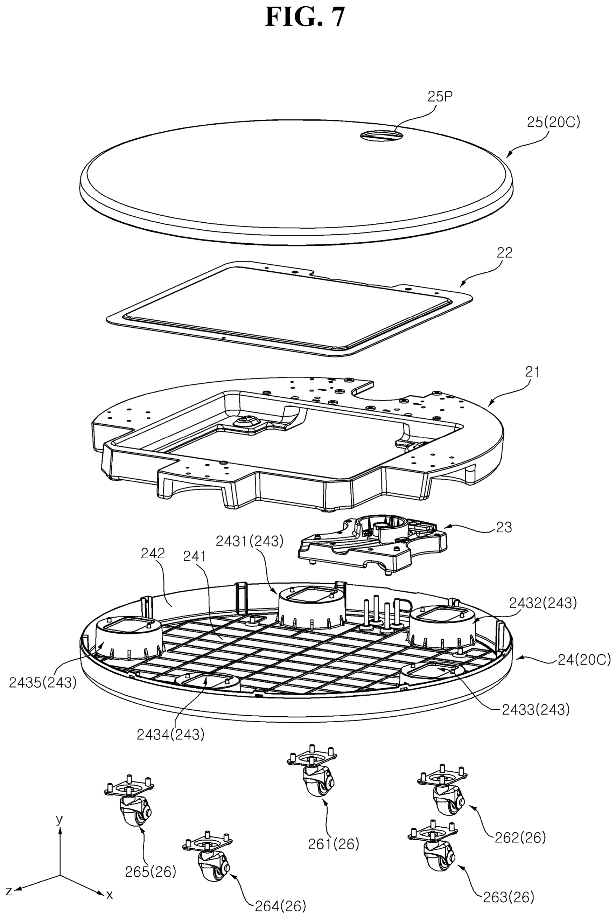

Referring to FIGS. 6 and 7, the base 20 may include a weight 21, a plate 22, a bracket 23, a case 20C, and a wheel assembly 26.

The weight 21 may have a generally round (i.e., circular or oval) ring shape. Alternatively, the weight 21 may have an angular ring shape such as a rectangular ring. Alternatively, the weight 21 may have a round or angular ring shape with a partially cut or discontinuous section. The weight 21 may include a metal material. The weight 21 may include a gray cast iron material. The weight 21 may be referred to as a weight plate 21, a plate 21, a block 21, or a core 21.

The plate 22 may be disposed on the weight 21. The plate 22 may have a rectangular plate shape. Alternatively, the plate 22 may have a circular or oval plate shape. The plate 22 may include a metal material. The plate 22 may be a steel plate. The plate 22 may be a hot rolled galvanized iron (HGI) plate. The plate 22 may be referred to as a shield 22.

The bracket 23 may be positioned under the weight 21. The bracket 23 may include an aluminum die casting material. The bracket 23 may be referred to as a pole bracket 23 or a bottom bracket 23.

The case 20C may define an outer appearance of the base 20. The weight 21, the plate 22, and the bracket 23 may be disposed within the case 20C. The case 20C may have a generally flat round box shape. Alternatively, the case 20C may have a generally angular box shape such as a rectangular box. The case 20C may include a plastic material. The case 20C may be referred to as a cover 20C or a housing 20C. The case 20C may include a bottom case 24 and a top case 25.

The bottom case 24 may define a bottom of the case 20C. The bottom case 24 may have a tub shape open at the top. The bottom case 24 may be referred to as a lower case 24 or a first case 24.

The top case 25 may define a top of the case 20C. The top case 25 may have a tub shape open at the bottom. The weight 21, the plate 22, and the bracket 23 may be positioned between the bottom case 24 and the top case 25. The top case 25 may be referred to as an upper case 25 or a second case 25.

The wheel assembly 26 may be mounted to a bottom of the bottom case 24. The wheel assembly 26 may allow the bottom case 24 to be spaced upward from a surface (e.g., a floor, the ground, etc.). The base 20 having the wheel assembly 26 may be movable on a surface. The base 20 may be referred to as a moving base 20.

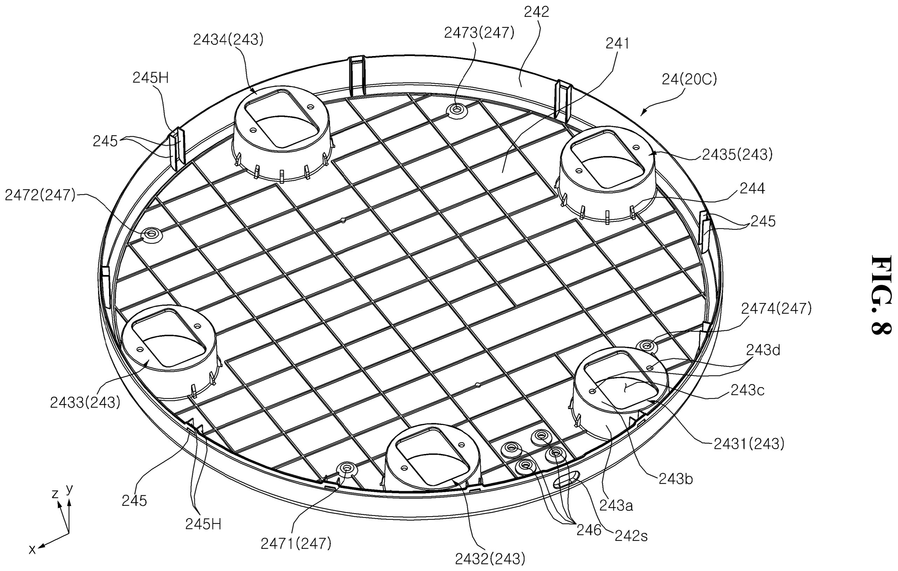

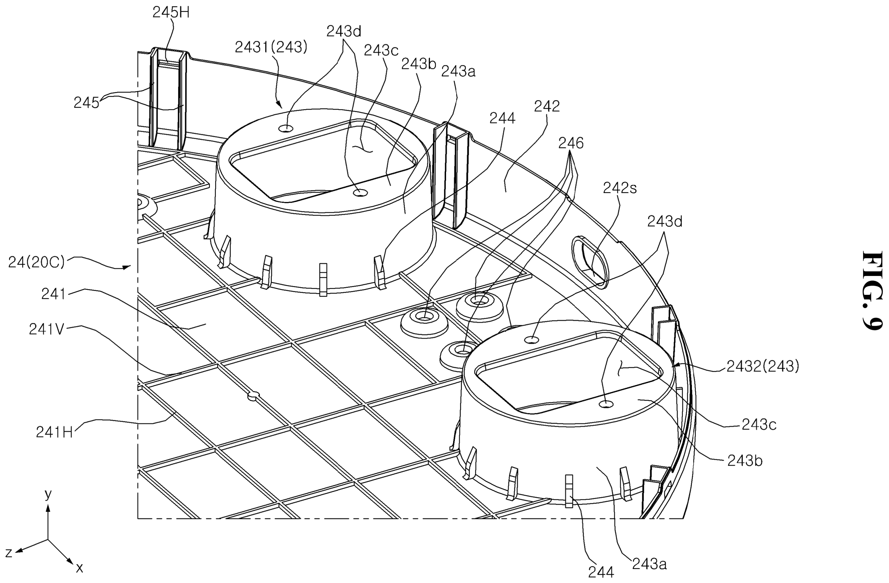

Referring to FIGS. 8 and 9, the bottom case 24 of the case 20C may include a bottom part 241 and a side part 242. The bottom part 241 may define a bottom of the bottom case 24. The bottom part 241 may have a circular plate shape. A plurality of ribs 241H and 241V may be formed on the bottom part 241. The horizontal ribs 241H and the vertical ribs 241V may intersect each other. The side part 242 may be disposed along an edge of the bottom part 241. The side part 242 may protrude upward from the edge of the bottom part 241, and may extend along the edge.

A supporter 243 may be recessed from a lower surface of the bottom part 241. The supporter 243 may be formed by being pressed upward from the lower surface of the bottom part 241. The supporter 243 may be adjacent to the side part 242. The supporter 243 may include a first part 243a and a second part 243b. The first part 243a may be a hollow cylinder protruding upward from an upper surface of the bottom part 241. The second part 243b may be bent from an upper end of the first part 243a to the inside of the first part 243a. A through-hole 243c may be formed in the second part 243b, and may communicate with a hollow space of the first part 243a. A hole 243d may be formed in the second part 243b, and may be spaced apart from the through-hole 243c. A pair of holes 243d may be disposed opposite each other with respect to the through-hole 243c. The supporter 243 may be referred to as a weight mount 243, a mount 243, or a recessed portion 243.

A plurality of supporters 2431, 2432, 2433, 2434, and 2435 may be arranged along the side part 242 of the bottom case 24. The plurality of supporters 2431, 2432, 2433, 2434, 2435 may correspond to a plurality of wheel assemblies 261, 262, 263, 264, 265 (see FIG. 7).

Ribs 244 may be formed on a side (or lateral) wall of the first part 243a of the supporter 243. Ribs 245 may be formed on an inner surface of the side part 242, and may be arranged along the side part 242.

A coupling portion 246 may be formed on the bottom part 241. The coupling portion 246 may protrude upward from the bottom part 241. The coupling portion 246 may have a hole. A plurality of coupling portions 246 may be adjacent to each other. The plurality of coupling portions 246 may be disposed at a rear portion of the bottom part 241. The plurality of coupling portions 246 may be disposed between a first supporter 2431 and a second supporter 2432.

A fixing portion 247 may be formed on the bottom part 241. The fixing portion 247 may protrude upward from the bottom part 241. The fixing portion 247 may have a hole. A plurality of fixing portions 2471, 2472, 2473, and 2473 may be arranged along the side part 242. A first fixing portion 2471 may be disposed between the second supporter 2432 and a third supporter 2433, and may be adjacent to the second supporter 2432. A second fixing portion 2472 may be disposed between the third supporter 2433 and a fourth supporter 2434. A third fixing portion 2473 may be disposed between the fourth supporter 2434 and a fifth supporter 2435. A fourth fixing portion 2474 may be disposed between the fifth supporter 2435 and the first supporter 2431, and may be adjacent to the first supporter 2431. The first to fourth fixing portions 2471, 2472, 2473, 2474 may be located on the vertices of a quadrangle.

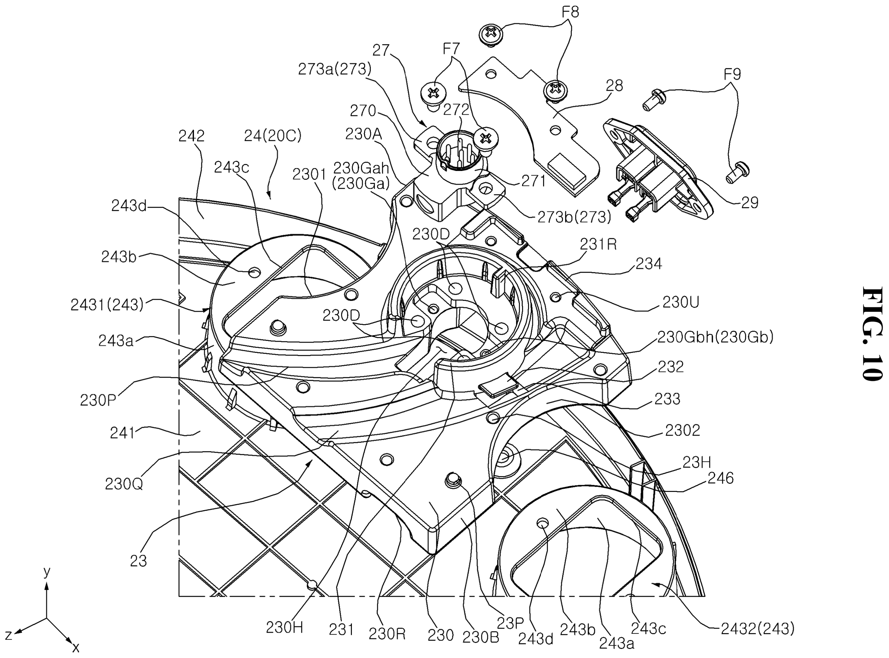

Referring to FIGS. 10 to 12, the bracket 23 may be disposed between the first supporter 2431 and the second supporter 2432. The bracket 23 may include a body 230 and a wall 231.

The body 230 may be disposed between the first supporter 2431 and the second supporter 2432, and may be positioned on the coupling portions 246 (see FIG. 9). The body 230 may have a generally flat block shape. A first groove 2301 may be formed on a first lateral side 230A of the body 230, and may extend along a lateral surface of the first part 243a of the first supporter 2431. A second groove 2302 may be formed on a second lateral side 230B of the body 230, and may extend along a lateral surface of the first part 243a of the second supporter 2432.

The wall 231 may be formed on the body 230. The wall 231 may protrude upward from an upper surface of the body 230. The wall 231 may have an open ring shape. A guide rib 231R may protrude from an inner surface of the wall 231. The guide rib 231R may be disposed between both ends of the wall 231.

A through-hole 230H may be formed in the body 230. The through-hole 230H may be positioned inside the wall 231. A protruding portion 230E may protrude from a lower surface of the body 230, and the through-hole 230H may be formed in the protruding portion 230E. A step may be formed between the protruding portion 230E and the lower surface of the body 230. A protrusion 230F may protrude from the lower surface of the body 230. A first protrusion 230Fa may be adjacent to the first lateral side 230A of the body 230, and may be adjacent to a front side of the body 230. A second protrusion 230Fb may be adjacent to the second lateral side 230B of the body 230, and may be adjacent to the front side of the body 230.

A first path 230P may be recessed from the upper surface of the body 230. The first path 230P may be referred to as a first cable path 230P or a first guide groove 230P. One end of the first path 230P may be adjacent to the through-hole 230H, and the other end of the first path 230P may be open to the outside of the body 230.

A second path 230Q may be recessed from the upper surface of the body 230. The second path 230Q may be referred to as a second cable path 230Q or a second guide groove 230Q. One end of the second path 230Q may be positioned outside the wall 231, and the other end of the second path 230Q may be open to the outside of the body 230. A protrusion 232 may protrude from an outer surface of the wall 231, and may be positioned to correspond to the second path 230Q. A hole 233 may be formed in the second path 230Q to correspond to the protrusion 232.

A third path 230R may be recessed from the lower surface of the body 230. The third path 230R may be referred to as a third cable path 230R or a third guide groove 230R. One end of third path 230R may be adjacent to the through-hole 230H, and the other end of the third path 230R may be open to the outside of the body 230.

A bottom connector 27 may include a body 270, a bottom housing 271, and a pin 272. The body 270 may be positioned in the through-hole 230H. Wings 273 may protrude from side surfaces of the body 270. A first wing 273a and a second wing 273b may be disposed opposite each other with respect to the body 270. A first recessed portion 230Ga inside the wall 231 may be recessed from the upper surface of the body 230, and the first wing 273a may be positioned on the first recessed portion 230Ga. A second recessed portion 230Gb inside the wall 231 may be recessed from the upper surface of the body 230, and the second wing 273b may be positioned on the second recessed portion 230Gb. Fastening members F7 may pass through the wings 273a and 273b and be coupled to holes 230Gah, 230Gbh of the recessed portions 230Ga, 230Gb. For example, the fastening members F7 may be screws. One end of the first path 230P may be adjacent to the body 270 of the bottom connector 27, and a cable connected to the bottom connector 27 may be positioned in the first path 230P.

A substrate 28 may be positioned on the body 230 while being adjacent to the wall 231. The substrate 28 may be a printed circuit board (PCB). The substrate 28 may be disposed at a rear portion of the body 230. A guide wall 234 may protrude from the body 230, and may extend along a portion of the substrate 28. A fastening member F8 may pass through the substrate 28 and be coupled to a hole 230U of the body 230. For example, the fastening member F8 may be a screw. One end of the second path 230Q may be adjacent to the substrate 28, and a cable connected to the substrate 28 may be positioned in the second path 230Q. For example, a port 28U such as a USB terminal may be mounted on the substrate 28. The port 28U may be a USB-C type terminal.

A socket 29 may be coupled to the rear of the protruding portion 230E. A fastening member F9 such as a screw may fix or secure the socket 29 to the protruding portion 230E. The socket 29 may be positioned to correspond to the through-hole 230H. A slot 242s may be formed in the side part 242, and the socket 29 may be exposed to the outside through the slot 242s. A power cable connected to an external power source may be electrically connected to the socket 29. One end of the third path 230R may be adjacent to the socket 29, and a cable connected to the socket 29 may be positioned in the third path 230R.

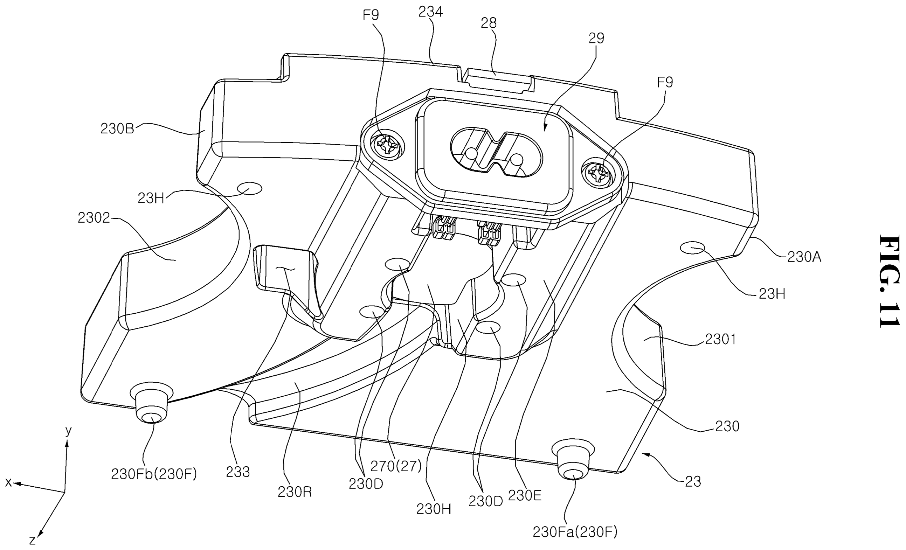

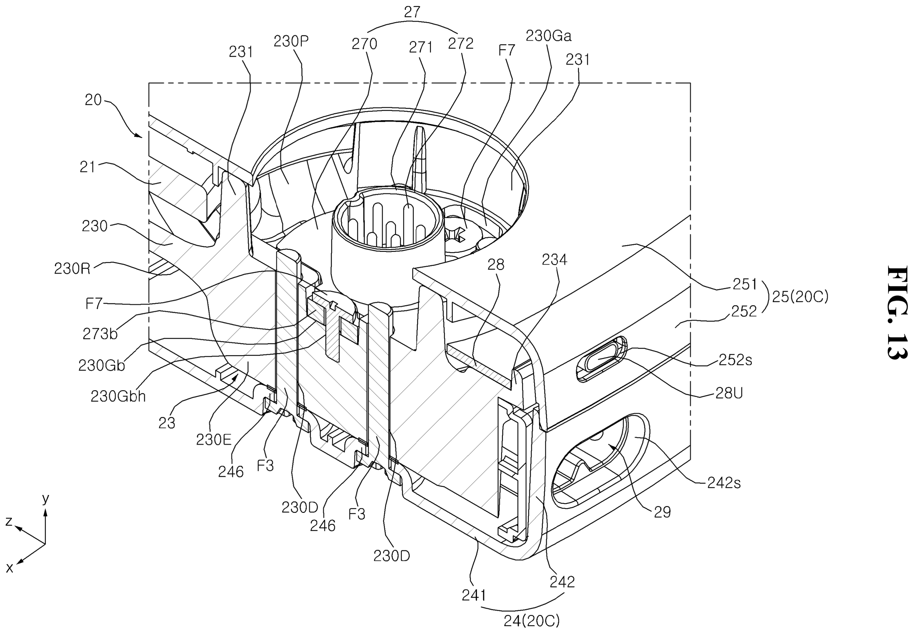

Referring to FIG. 13, the protruding portion 230E of the bracket 23 may be positioned on the coupling portion 246 of the bottom case 24. The protrusion 230F of the bracket 23 (see FIG. 11) may be positioned on the bottom part 241 of the bottom case 24. Accordingly, a bottom of the protruding portion 230E of the bracket 23 may be spaced upward from an upper surface of the bottom part 241.

A fastening member F3 may pass through the coupling portion 246 and be coupled to a hole 230D of the protruding portion 230E. The holes 230D (see FIG. 10) may be positioned inside the wall 231 of the bracket 23. The fastening members F3 and the holes 230D may be arranged along the wall 231. A portion of the fastening member F3 may be exposed above the bracket 23. For example, the fastening member F3 may be a (long) bolt. Accordingly, the bracket 23 may be coupled to the bottom case 24.

A slot 252s may be formed in a side part 252 of the top case 25. A charging cable connected to an external electronic device may be electrically connected to the port 28U mounted on the substrate 28 through the slot 252s. The port 28U may be a USB-C type terminal. An external electronic device may be supplied with power from the port 28U.

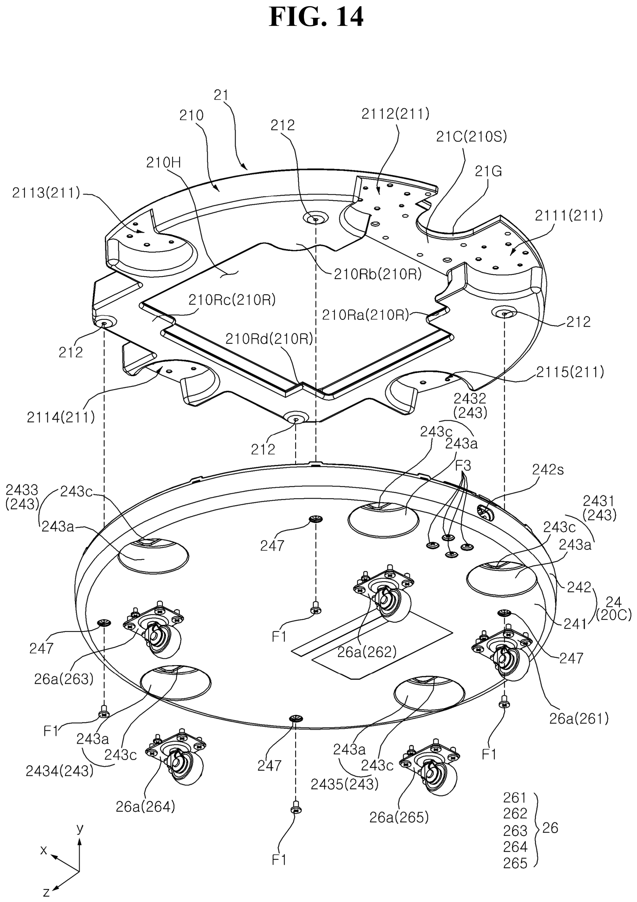

Referring to FIGS. 14 to 16, the weight 21 may be positioned on the supporter 243 and the bracket 23. The weight 21 may cover the supporter 243 and a portion of the bracket 23. The weight 21 may include a body 210 and a wheel mount 211.

The body 210 may be positioned on the bottom part 241 of the bottom case 24. An edge of the body 210 may be disposed along the side part 242 of the bottom case 24. A first groove 210Ga may be recessed from a lateral side of the body 210, and may be positioned between the fourth supporter 2434 and the fifth supporter 2435. A second groove 210Gb may be recessed from a lateral side of the body 210, and may be positioned between the third supporter 2433 and the fourth supporter 2434.

The wheel mount 211 may be recessed from a lower surface of the body 210. The wheel mount 211 may be recessed from a lateral side of the body 210. The supporter 243 coupled to the wheel mount 211 may be adjacent to the side part 242 of the bottom case 24. The wheel mount 211 may be referred to as a recessed portion 211 or a groove 211. The wheel mount 211 may be open to the outside of the body 210. The wheel mount 211 may correspond to the supporter 243 of the bottom case 24. A side wall of the wheel mount 211 may extend along a lateral surface of the first part 243a of the supporter 243. The side wall of the mount 211 may extend along an arc.

A plurality of wheel mounts 2111, 2112, 2113, 2114, and 2115 may be positioned to respectively correspond to the plurality of supporters 2431, 2432, 2433, 2434, and 2435. A plurality of wheel assemblies 26 may be respectively positioned in the plurality of supporters 2431, 2432, 2433, 2434, and 2435, and may be respectively coupled to the plurality of wheel mounts 2111, 2112, 2113, 2114, and 2115.

A first wheel mount 2111 may be recessed from the lower surface of the body 210, and may cover the first supporter 2431. A side wall of the first wheel mount 2111 may extend along a portion of a lateral surface of the first part 243a of the first supporter 2431. A wheel plate 26a of a first wheel assembly 261 may be positioned at a lower side of the first wheel mount 2111 through a hole 243c of the first supporter 2431. The first wheel mount 2111 may be positioned on the second part 243b of the first supporter 2431. A fastening member Fa such as a screw may pass through the wheel plate 26a and be coupled to a first hole 211a of the first wheel mount 2111. A fastening member Fb such as a screw may pass through the second part 243b of the first supporter 2431 and be coupled to a second hole 211b of the first wheel mount 2111.

A second wheel mount 2112 may be recessed from the lower surface of the body 210, and may cover the second supporter 2432. A side wall of the second wheel mount 2112 may extend along a portion of the lateral surface of the first part 243a of the second supporter 2432. A wheel plate 26a of a second wheel assembly 252 may be positioned at a lower side of the second wheel mount 2112 through a hole 243c of the second supporter 2432. The second wheel mount 2112 may be positioned on the second part 243b of the second supporter 2432. A fastening member Fa such as a screw may pass through the wheel plate 26a and be coupled to a first hole 211a of the second wheel mount 2112. A fastening member Fb such as a screw may pass through the second part 243b of the second supporter 2432 and be coupled to a second hole 211b of the second wheel mount 2112.

A third wheel mount 2113 may be recessed from the lower surface of the body 210, and may cover the third supporter 2433. A side wall of the third wheel mount 2113 may extend along a portion of the lateral surface of the first part 243a of the third supporter 2433. A wheel plate 26a of a third wheel assembly 263 may be positioned at a lower side of the third wheel mount 2114 through a hole 243c of the third supporter 2433. A fastening member Fa such as a screw may pass through the wheel plate 26a and be coupled to a first hole 211a of the third wheel mount 2113. A fastening member Fb such as a screw may pass through the second part 243b of the third supporter 2433 and be coupled to a second hole 211b of the third mount 2113.

A fourth wheel mount 2114 may be recessed from the lower surface of the body 210, and may cover the fourth supporter 2434. A side wall of the fourth wheel mount 2114 may extend along a portion of the lateral surface of the first part 243a of the fourth supporter 2434. A wheel plate 26a of a fourth wheel assembly 264 may be positioned at a lower side of the fourth wheel assembly 264 through a hole 243c of the fourth supporter 2434. A fastening member Fa such as a screw may pass through the wheel plate 26a and be coupled to a first hole 211a of the fourth wheel mount 2114. A fastening member Fb such as a screw may pass through the second part 243b of the fourth supporter 2434 and be coupled to a second hole 211b of the fourth wheel mount 2114.

A fifth wheel mount 2115 may be recessed from the lower surface of the body 210, and may cover the fifth supporter 2435. A side wall of the fifth wheel mount 2115 may extend along a portion of the lateral surface of the first part 243a of the fifth supporter 2435. A wheel plate 26a of a fifth wheel assembly 265 may be positioned at a lower side of the fifth wheel mount 2115 through a hole 243c of the fifth supporter 2435. A fastening member Fa such as a screw may pass through the wheel plate 26a and be coupled to a first hole 211a of the fifth wheel mount 2115. A fastening member Fb such as a screw may pass through the second part 243b of the fifth supporter 2435 and may be coupled to a second hole 211b of the fifth wheel mount 2115.

A hole 210H may be formed in the body 210. The hole 210H may pass through the body 210 in a thickness direction of the body 210. The hole 210H may be a rectangular hole formed in a middle portion of the body 210. The hole 210H may be referred to as a hollow space 210H of the weight 21.

An inner rib 210R may protrude from a portion of the body 210 that defines a boundary of the hole 210H. The inner rib 210R may be located closer to the upper surface than to the lower surface of the body 210. A plurality of inner ribs 210R may protrude from corners of the portion of the body 210 defining the boundary of the hole 210H. A first coupling portion 210Ca may protrude from an upper surface of a first inner rib 210Ra. A second coupling portion 210Cb may protrude from an upper surface of a second inner rib 210Rb. A third coupling portion 210Cc may protrude from an upper surface of a third inner rib 210Rc. A fourth coupling portion 210Cd may protrude from an upper surface of a fourth inner rib 210Rd.

A slot 210S may be formed between the first wheel mount 2111 and the second wheel mount 2112. The slot 210S may be positioned between the first inner rib 210Ra and the second inner rib 210Rb. A cover potion 21C may be a portion of the weight 21 that defines an upper side of the slot 210S. A groove 21G may be formed from an edge of the cover portion 21C to the inside of the cover portion 21C.

The cover potion 21C may cover the body 230 of the bracket 23. The cover potion 21C may cover the first path 230P and the second path 230Q of the body 230. The wall 231 may be inserted into the groove 21G of the weight 21. The wall 231 may protrude upward from an upper surface of the weight 21. A portion of the substrate 28 may be positioned in the groove 21G. A fastening member F2 such as a screw may pass through the cover portion 21C and be coupled to the hole 230H of the body 230. A pin 230P of the body 230 may be inserted into a hole 21H of the cover portion 21C, and may guide the coupling of the weight 21 and the bracket 23.

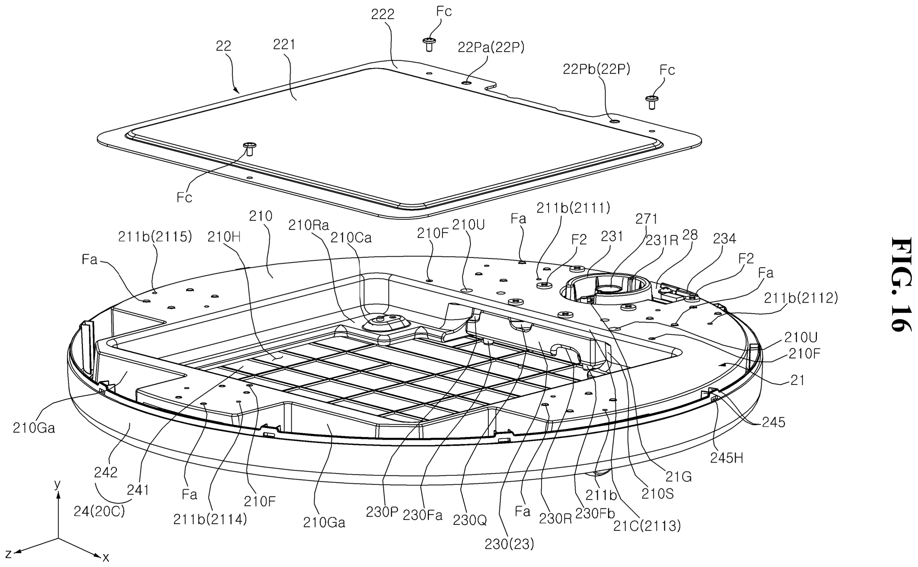

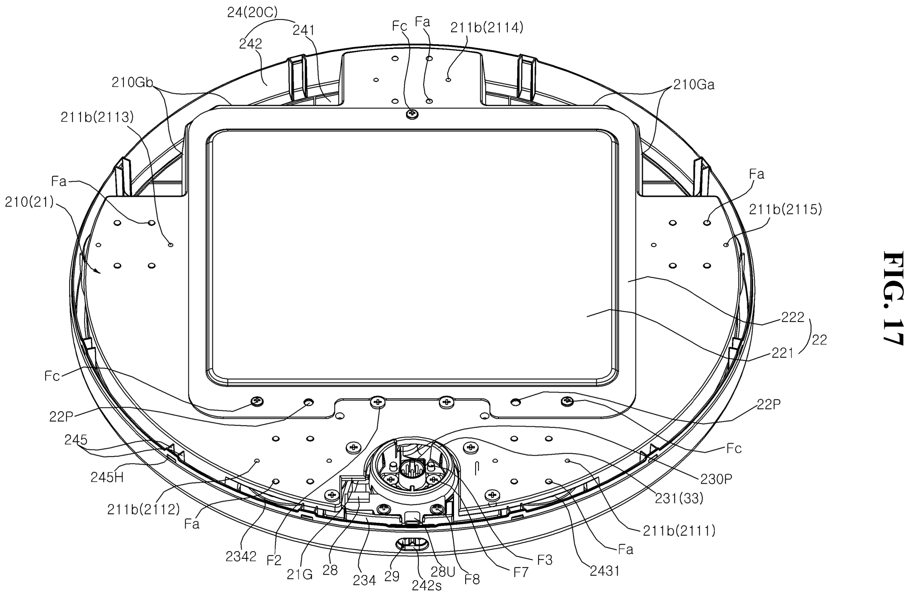

Referring to FIGS. 16 and 17, the ribs 245 may be adjacent to a lateral surface of the weight 21.

The plate 22 may be positioned on the body 210. The plate 22 may cover the hole 210H of the body 210. The plate 22 may have a shape corresponding to the hole 210H. The plate 22 may be a rectangular plate 22. The plate 22 may include a body 221 and a rim 222 extending along an edge of the body 221. The rim 222 may be formed as the body 221 is pressed downward.

A fastening member Fc such as a screw may pass through the rim 222 and be coupled to a hole 210F of the body 210. The screws Fc may be located on the vertices of a triangle. A guide pin 22P may protrude from a lower surface of the rim 222, and may be inserted into a guide hole 210U of the body 210. The guide pin 22P may guide the coupling of the plate 22 and the weight 21.

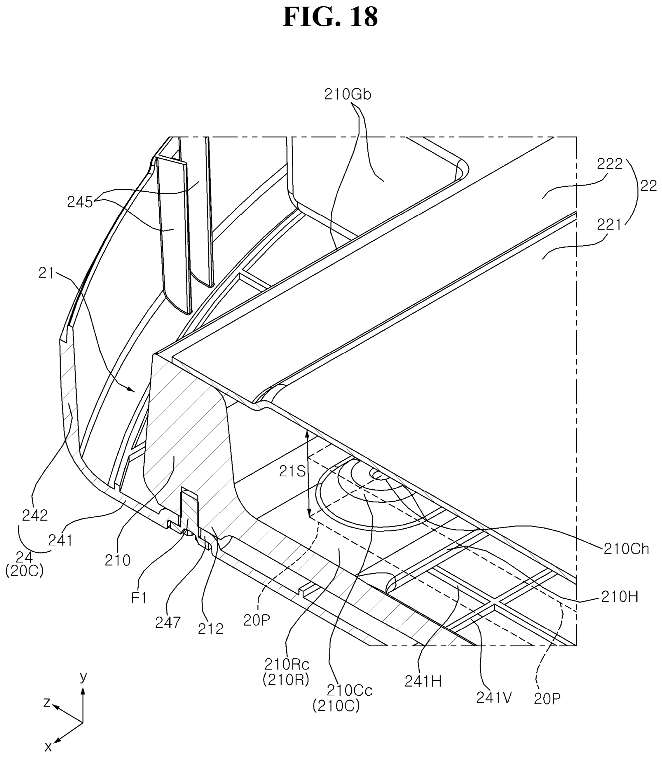

Referring to FIG. 18, a fixing portion 212 may protrude from a lower surface of the body 210 of the weight 21. The fixing portion 212 may be positioned on the fixing portion 247 of the bottom case 24. A plurality of fixing portions 212 (see FIG. 14) may be aligned with the plurality of fixing portions 247 of the bottom case 24, respectively. Accordingly, a bottom of the weight 21 may be spaced apart from an upper surface of the bottom part 241.

A fastening member F1 such as a screw may pass through the fixing portion 247 and be coupled to the fixing portion 212. Accordingly, the weight 21 may be coupled to the bottom case 24.

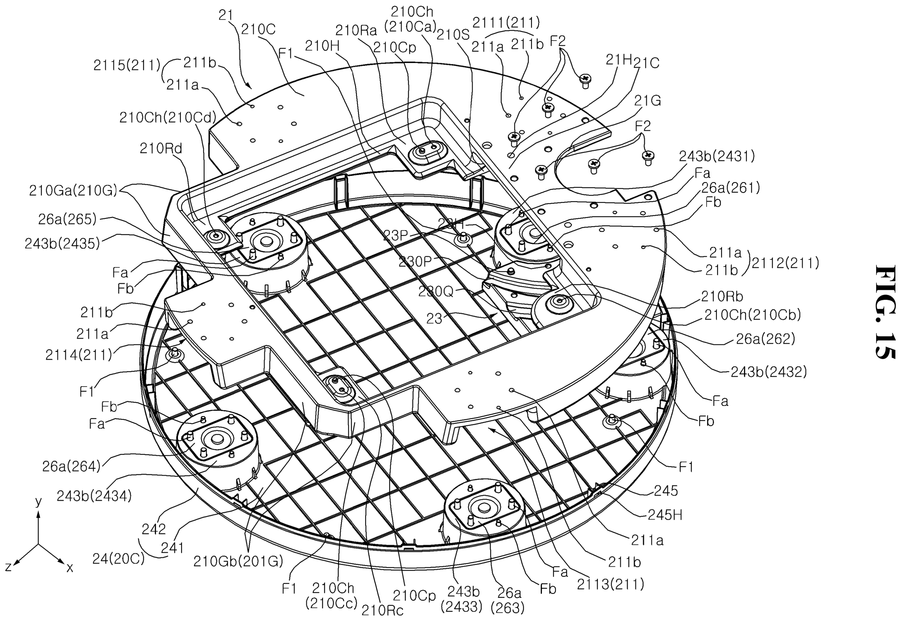

An accommodation space 21S may be formed between the coupling portion 210C and the plate 22. A substrate 20P such as a printed circuit board (PCB) may be mounted on the coupling portions 210Ca, 210Cb, 210Cc, and 210Cd. The substrate 20P may be referred to as a power supply unit 20P. The substrate 20P may cover the hole 210H. Fastening members such as screws may fix or secure the substrate 20P to holes 210Ch of the coupling portions 210Ca, 210Cb, 210Cc, and 210Cd. A protrusion 210Cp (see FIG. 15) may protrude from the coupling portion 210C, may be inserted into the substrate 20P, and may guide the coupling of the substrate 20P and the coupling portion 210C.

The plate 22 may cover the substrate 20P in the accommodation space 21S. The plate 22 may protect the substrate 20P.

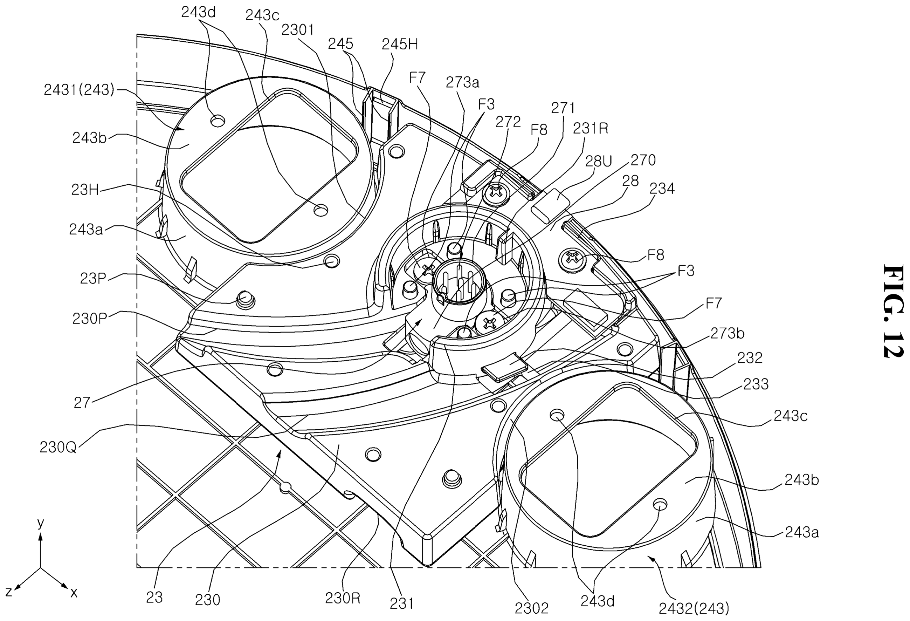

The body 230 of the bracket 23 (see FIG. 16) may be positioned in the slot 210S of the weight 21. The first to third paths 230P, 230Q, 230R may face the substrate 20P in the accommodation space 21S. A first cable may be positioned in the first path 230P, and may connect the bottom connector 27 (see FIG. 12) and the substrate 20P in the accommodation space 21S. A third cable may be positioned in the third path 230R, and may connect the socket 29 (see FIG. 11) connected to a power cable and the substrate 20P in the accommodation space 21S. The display device 1 may be driven by power from the power cable. For example, the power cable may supply power to a battery of the display 10 through the cables and a cable C described later.

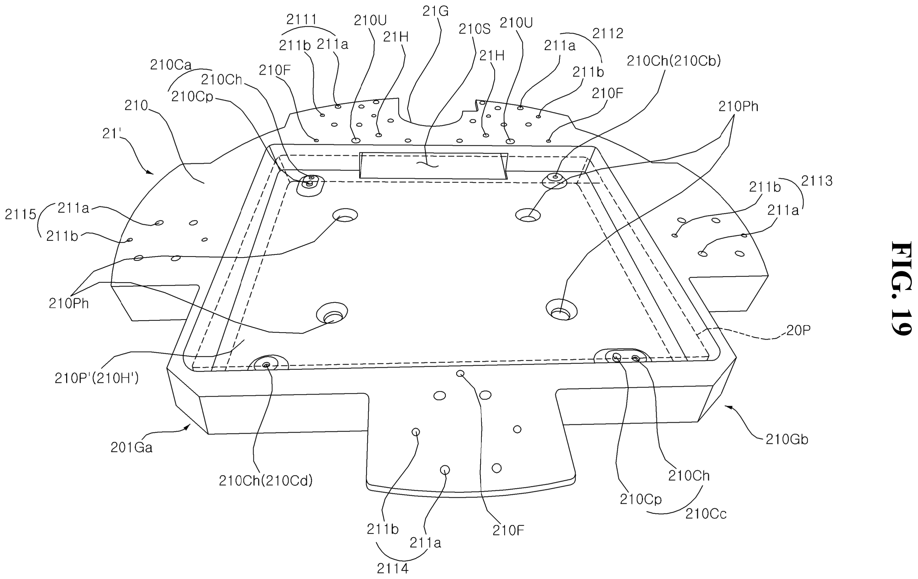

Referring to FIGS. 19 to 21, unlike the weight 21 having the hole 210H described above with reference to FIGS. 14 to 18, a weight 21' may include a recessed portion 210H'. The recessed portion 210H' may be recessed from an upper surface of a body 210 of the weight 21'. The recessed portion 210H' may be a rectangular groove formed in a middle portion of the body 210 instead of the hole 210H (see FIGS. 14 and 15). A bottom 210P' of the recessed portion 210H' may form a step that lowers from the upper surface of the body 210. The bottom 210P' may be generally flat. A slot 210S may be formed in a side wall of the recessed portion 210H'. The cables disposed in the cable paths 230P, 230Q, and 230R (see FIG. 12) of the bracket 23 may be electrically connected to a substrate of the recessed portion 210H'.

A plurality of coupling portions 210Ca, 210Cb, 210Cc, and 210Cd may protrude from the bottom 210P'. A plurality of through-holes 210Ph may be formed in the bottom 210P'. A substrate (not shown) such as a printed circuit board (PCB) may be mounted on the coupling portions 210Ca, 210Cb, 210Cc, and 210Cd.

The plate 22 may be coupled to the upper surface of the body 210 of the weight 21', and may cover the recessed portion 210H'. The plate 22 may protect the substrate 20P. The bottom 210P' of the recessed portion 210H' may minimize Electromagnetic Interference (EMI) of the substrate 20P on the coupling portions 210Ca, 210Cb, 210Cc, and 210Cd.

Meanwhile, a first groove 210Ga may be recessed from a lateral side of the body 210, and may be positioned between the fifth wheel mount 2115 and the fourth wheel mount 2114. A second groove 210Gb may be recessed from a lateral side of the body 210, and may be positioned between the fourth wheel mount 2114 and the third wheel mount 2113. A third groove 210Gc may be recessed from a lateral side of the body 210, and may be positioned between the third wheel mount 2113 and the second wheel mount 2112. A fourth groove 210Gd may be recessed from a lateral side of the body 210, and may be positioned between the first wheel mount 2111 and the fifth wheel mount 2115.

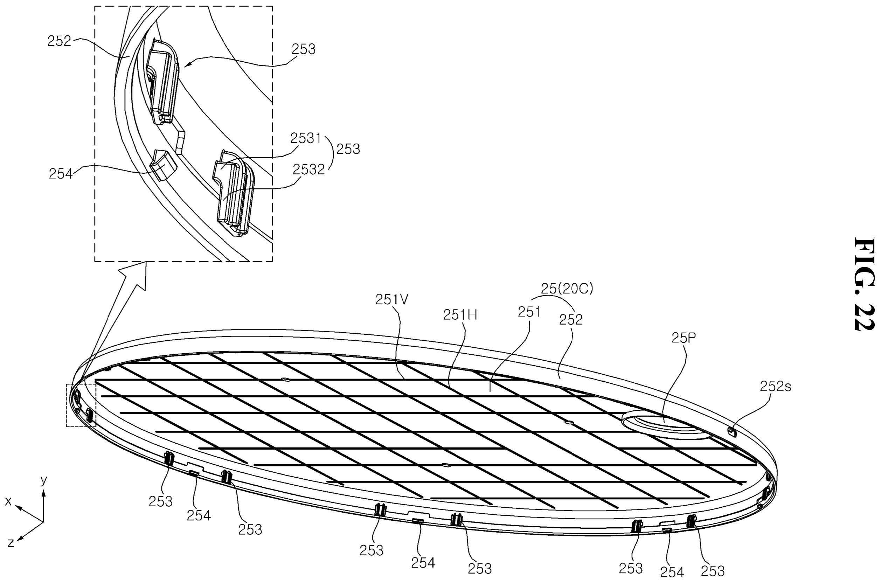

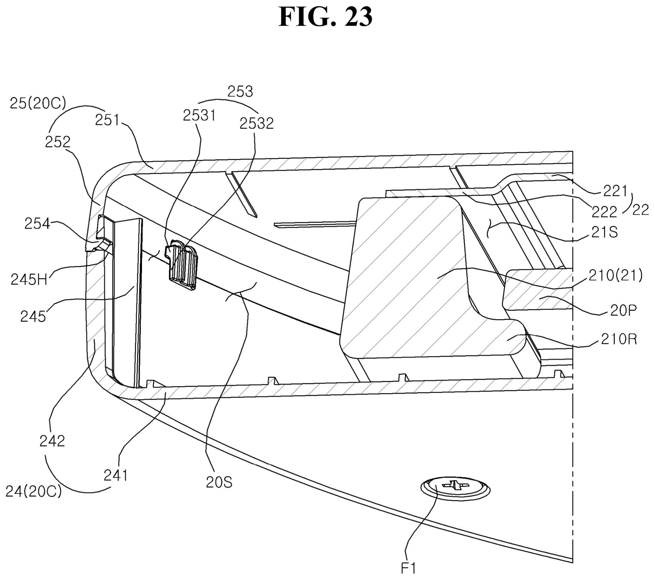

Referring to FIGS. 22 and 23, the top case 25 of the case 20C may include a top part 251 and a side part 252. The top part 251 may define a top of the top case 25. The top part 251 may have a circular plate shape. A plurality of ribs 251H and 251V may be formed on a lower surface of the top part 251. Horizontal ribs 251H and vertical ribs 251V may intersect each other. The side part 252 may be disposed along an edge of the top part 251. The side part 252 may protrude downward from the edge of the top part 251, and may extend along the edge. A hole 25P may be formed in the top part 251 while being adjacent to the side part 252.

A guide rib 253 may protrude from the inside of the side part 252. The guide rib 253 may include a first part 2531 and a second part 2532. The first part 2531 may protrude from the inside of the side part 252, and may be bent downward from an end of the first part 2531. A plurality of guide ribs 253 may be arranged along the side part 252. The side part 242 of the bottom case 24 may be inserted between the side part 252 of the top case 25 and the second part 2532 of the guide rib 253.

A hook 254 may protrude from the inside of the side part 252. The hook 254 may be adjacent to a lower end of the side part 252. The hook 254 may be disposed along the side part 252. The hook 254 may be positioned between a pair of guide ribs 253. The hook 254 of the top case 25 may be inserted into and coupled to a hole 245H of the side part 242.

Accordingly, the top case 25 may be coupled to the bottom case 24. The top case 25 may cover the weight 21, the plate 22, and a portion of the bracket 23. An inner space 20S of the base 20 may be formed between the bottom case 24 and the top case 25, and internal components of the base 20 may be disposed in the inner space 20S.

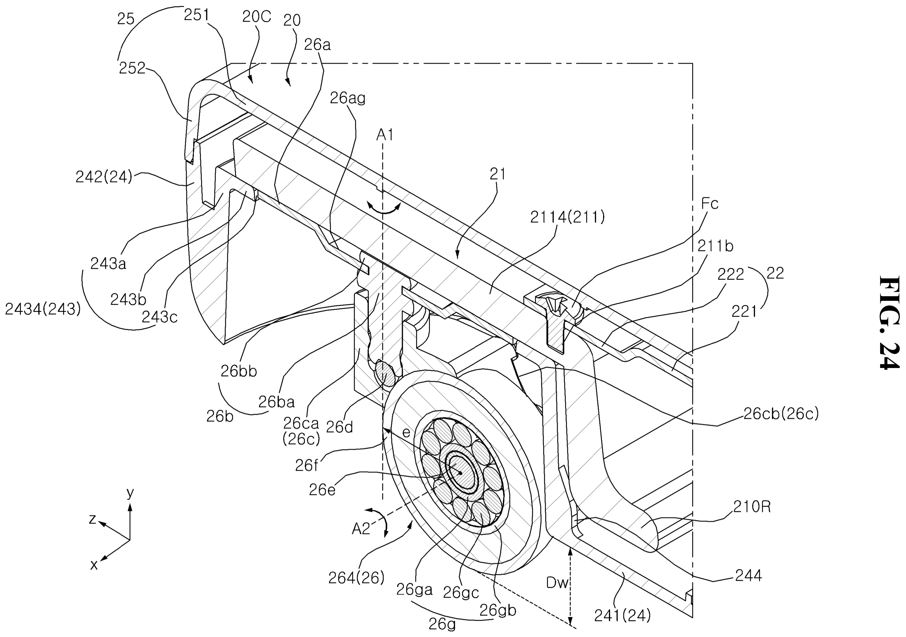

Referring to FIG. 24, the wheel assembly 26 may include a wheel plate 26a, a stem 26b, a body 26c, a ball 26d, a shaft 26e, a wheel 26f, and a bearing 26g. The wheel assembly 26 may be referred to as a caster 26 or a swivel caster 26.

The wheel plate 26a may have a generally rectangular plate shape. The wheel plate 26a may be positioned in the through-hole 243c of the supporter 243. The wheel mount 211 may be positioned on the second part 243b of the supporter 243 and the wheel plate 26a. The wheel plate 26a may be fixed to the wheel mount 211 by a fastening member Fa (see FIGS. 15 and 16) such as a screw. The second part 243b may be fixed to the wheel mount 211 by a fastening member Fb (see FIGS. 15 and 16) such as a screw.

The stem 26b may be disposed in an inner space of the first part 243a of the supporter 243, and may protrude downward from the wheel plate 26a. The stem 26b may be elongated in the vertical direction. A first portion 26ba of the stem 26b may be positioned under the wheel plate 26a, and a second portion 26bb of the stem 26b may be fixed in the form of a rivet to a recessed portion 26ag formed on an upper surface of the wheel plate 26a.

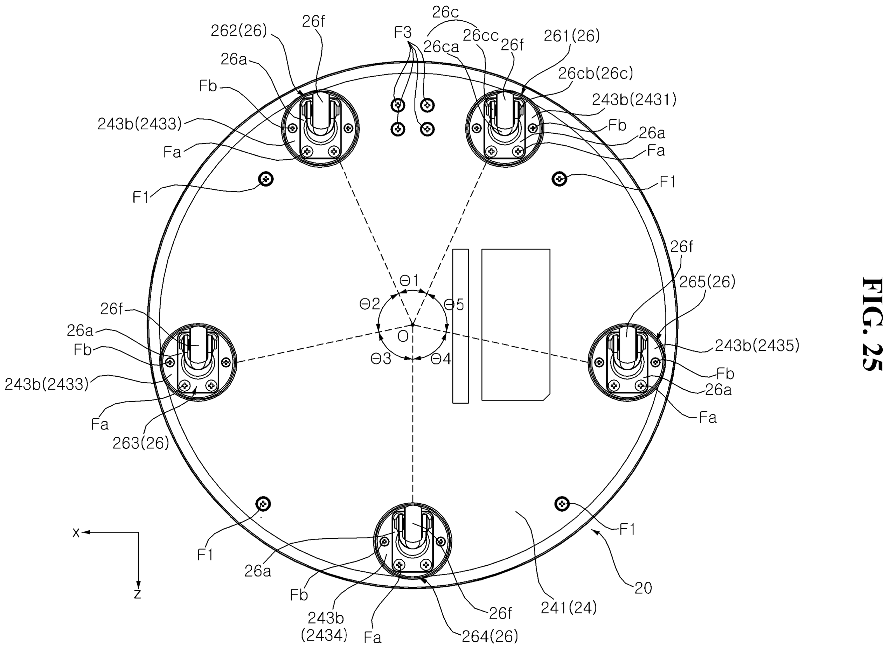

The body 26c may be disposed opposite the wheel plate26a with respect to the stem 26b. A first portion 26ca of the body 26c may cover a portion of the stem 26b. A second portion 26cb and a third portion 26cc of the body 26c may protrude downward from the first portion 26ca, and may be spaced apart from each other in the horizontal direction (see FIG. 25).

The ball 26d may be disposed between a groove (no reference numeral) at a lower end of the stem 26b and a groove (no reference numeral) formed on an inner surface of the body 26c. The body 26c may swivel about a longitudinal axis A1 of the stem 26b.

The shaft 26e may be elongated in the horizontal direction, and may be coupled to the second and third portions 26cb and 26cc (see FIG. 25) of the body 26c.

The wheel 26f may be disposed between the second and third portions 26cb and 26cc (see FIG. 25) of the body 26c, and may surround an outer circumferential surface of the shaft 26e. The wheel 26f may protrude downward from a lower surface of the bottom case 24 (see a distance Dw). The wheel 26f may include a rubber, silicon, resin, or ABS material.

The bearing 26g may be disposed between the shaft 26e and the wheel 26f, and may be coupled to the shaft 26e and the wheel 26f. The bearing 26g may include an inner ring 26ga, an outer ring 26gb, and rotary members 26gc. The inner ring 26ga may be coupled to an outer circumference of the shaft 26e. The outer ring 26gb may be concentric with the inner ring 26ga, and may have a larger diameter than the inner ring 26ga. The rotary members 26gc may be rotatably coupled between the inner ring 26ga and the outer ring 26gb. The rotary members 26gc may be balls or rollers. The bearing 26g may support the rotation of the wheel 26f with respect to the shaft 26e.

Thus, the wheel 26f may rotate about a longitudinal axis A2 of the shaft 26e. In addition, the wheel 26f may rotate about the longitudinal axis A1 of the stem 26b. That is, the wheel 26f may rotate about two axes. A center of the shaft 26e may be offset from the longitudinal axis A1 of the stem 26b by a certain distance e. Accordingly, the base 20 may smoothly move on a surface through the wheel assembly 26.

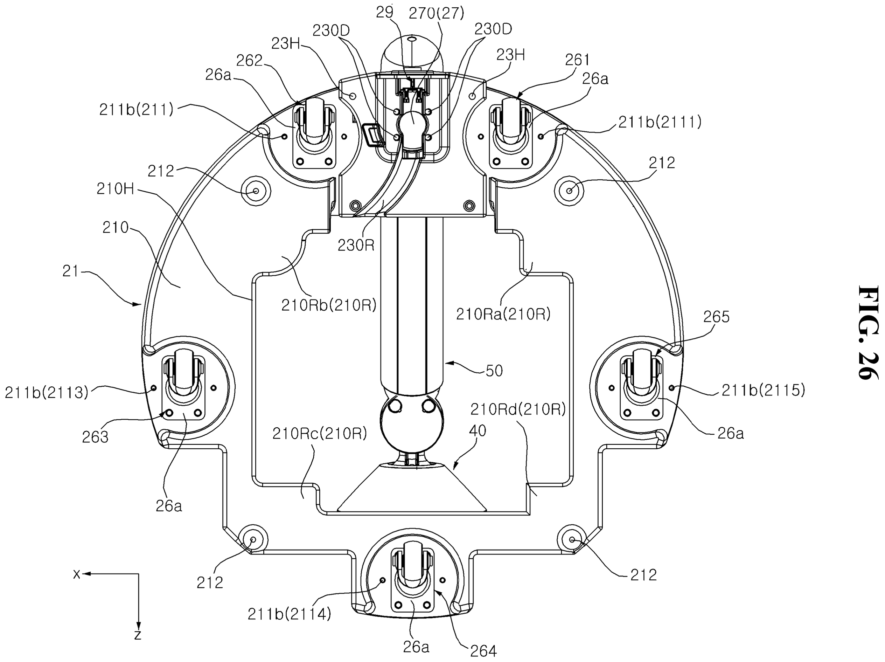

Referring to FIGS. 25 and 26, the plurality of wheel assemblies 26 may be arranged along an edge of a bottom part 2241 of the bottom case 24.

With respect to a center O of the base 20, an angle theta 1 between the first wheel assembly 261 and the second wheel assembly 262 may be the smallest among angels between the plurality of wheel assemblies 261, 262, 263, 264, 265.

With respect to the center O of the base 20, an angle theta 2 between the second wheel assembly 262 and the third wheel assembly 263 may be greater than the angle theta 1. With respect to the center O of the base 20, an angle theta 3 between the third wheel assembly 263 and the fourth wheel assembly 264 may be greater than the angle theta 1. With respect to the center O of the base 20, an angle theta 4 between the fourth wheel assembly 264 and the fifth wheel assembly 265 may be greater than the angle theta 1. With respect to the center O of the base 20, an angle theta 5 between the fifth wheel assembly 265 and the first wheel assembly 261 may be greater than the angle theta 1. For example, the angles theta 2, theta 3, theta 4, and theta 5 may be equal to each other or slightly different from each other.

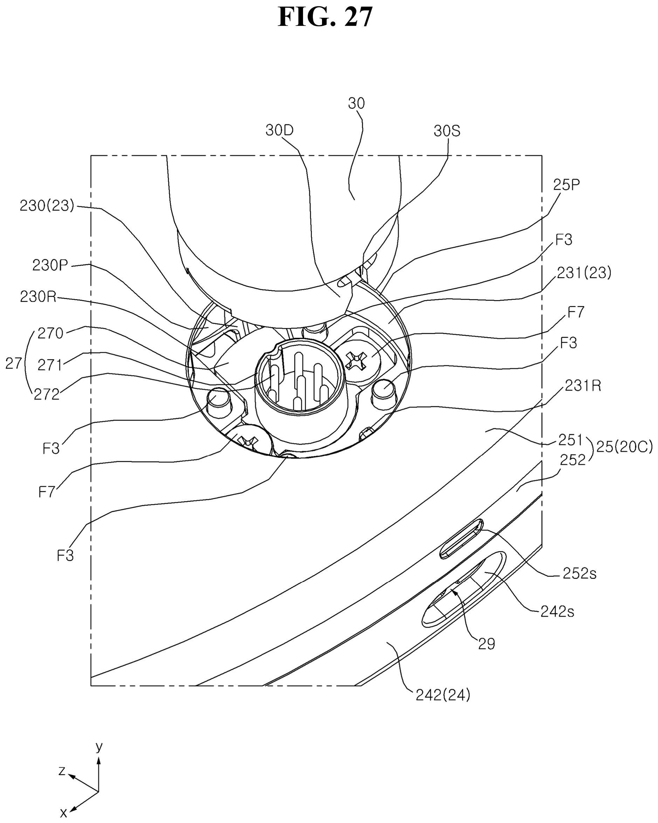

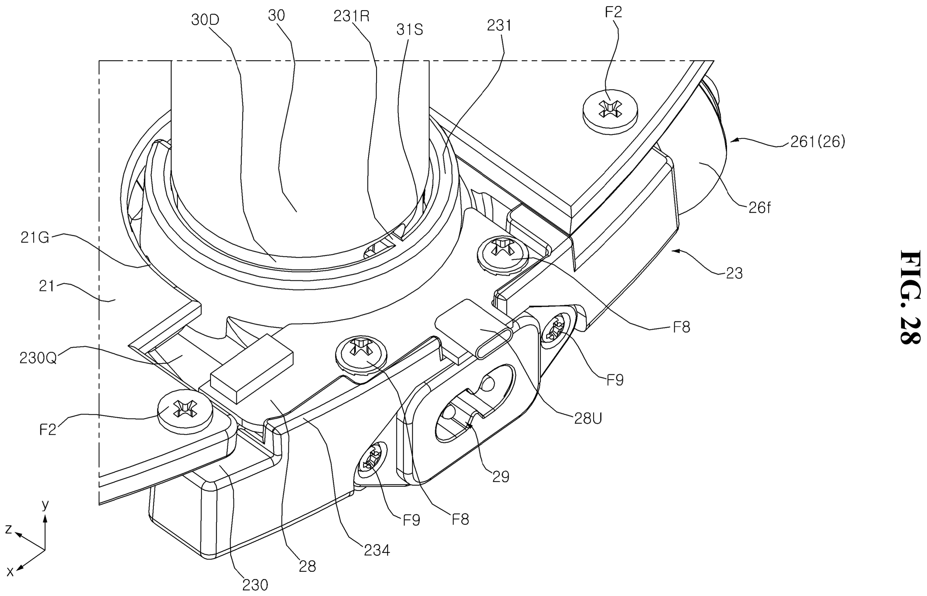

Referring to FIGS. 27 and 28, an insertion portion 30D may define a lower end of the pole 30. An outer diameter of the insertion portion 30D may be less than an outer diameter of a remaining portion of the pole 30. A guide slit 30S may be formed in the insertion portion 30D. The guide slit 30S may have a width that increases (widens) toward the bottom. The guide rib 231R may protrude from an inner surface of the wall 231 of the bracket 23, and may be aligned with the guide slit 30S. The insertion portion 30D may be inserted into the hole 25P of the top case 25, and the guide rib 231R may be inserted into the guide slit 231R.

Accordingly, the guide rib 231R and the guide slit 30S may guide the coupling of the pole 30 and the case 20C. A lower end of the insertion portion 30D may be positioned on the body 230 of the bracket 23. The wall 231 of the bracket 23 may surround a lateral surface of the insertion portion 30D.

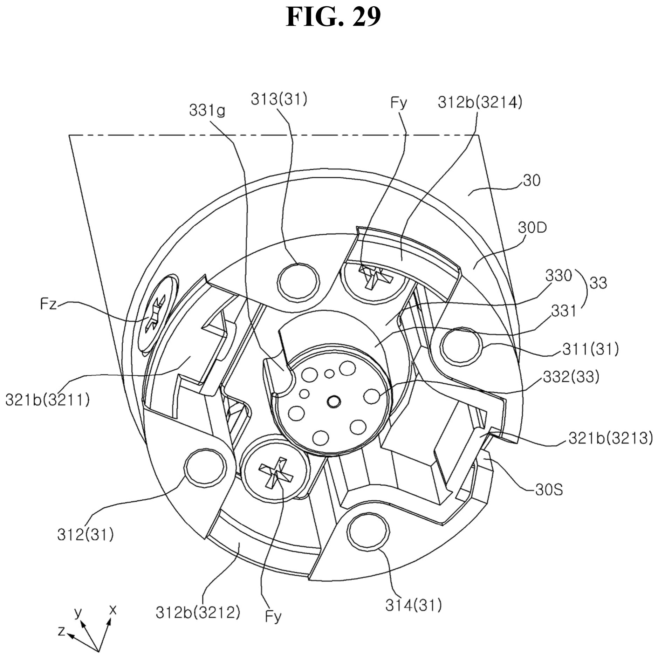

Referring to FIG. 29, the pole 30 may extend in the vertical direction. The pole 30 may have a hollow cylindrical shape that is vertically long.

A rib 31 may be formed on an inner surface of the pole 30. The rib 31 may extend in a longitudinal direction of the pole 30. The rib 31 may have a triangular cross-section. The ribs 31 may be spaced apart from each other along an inner circumferential surface of the pole 30. First and second ribs 311 and 312 may be disposed opposite each other with respect to a center of the pole 30. The first and second ribs 311 and 312 may be spaced 180 degrees apart from each other with respect to the center of the pole 30. A third rib 313 may be positioned between the first rib 311 and the second rib 312. A fourth rib 314 may be positioned between the first rib 311 and the second rib 312, and may be disposed opposite the third rib 313 with respect to the center of the pole 30. The third and fourth ribs 313 and 314 may be spaced 180 degrees apart from each other with respect to the center of the pole 30.

Fastening members F3 may be coupled to holes of the ribs 311, 312, 313, and 314. Accordingly, the pole 30 may be coupled to the bracket 23.

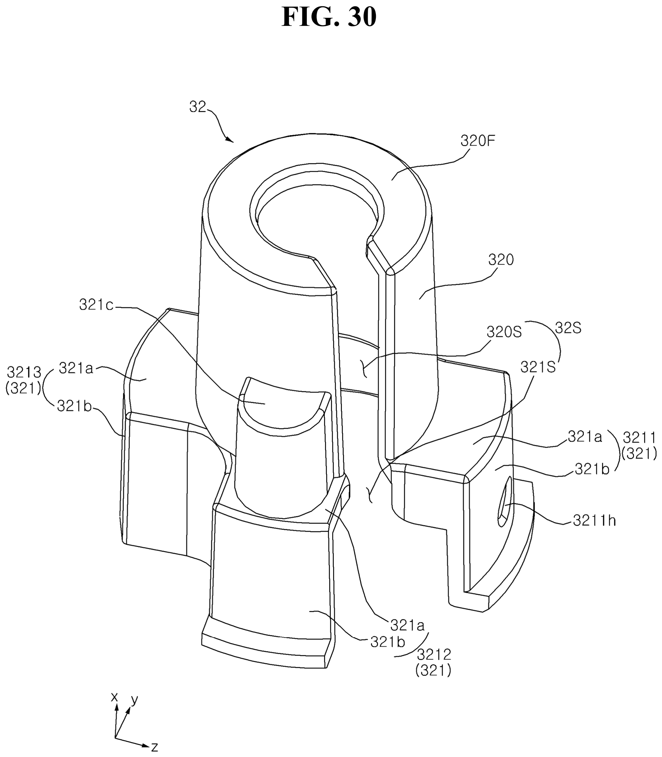

Referring to FIGS. 29 and 30, a bracket 32 may include a body 320 and legs 321. The bracket 32 may be referred to as a top bracket 32.

The body 320 may have a hollow cylindrical shape. A flange 320F may be bent from an upper end of the body 320 toward the inside of the body 320. The flange 320F may extend along the upper end of the body 320. The body 320 may be disposed within the pole 30.

The legs 321 may extend from a lower end of the body 320. A first leg 3211, a second leg 3212, a third leg 3213, and a fourth leg 3214 may be spaced apart from each other in a circumferential direction of the body 320. The first to fourth legs 3211, 3212, 3213, and 3214 may be spaced 90 degrees apart from each other. The legs 321 may each include a first part 321a extending in a radial direction of the body 320 and a second part 321b bent downward from the first part 321a.

The second part 321b of the first leg 3211 may be disposed between the second rib 312 and the third rib 313. A fastening member Fz such as a screw may pass through the insertion portion 30D and be coupled to a hole 3211h of the second part 321b of the first leg 3211. Accordingly, the bracket 32 may be coupled to the pole 30.

The second part 321b of the second leg 3212 may be disposed between the second rib 312 and the fourth rib 314. The second part 321b of the third leg 3213 may be disposed between the first rib 311 and the fourth rib 314. The second part 321b of the fourth leg 3214 may be disposed between the first rib 311 and the third rib 313.

Referring to FIGS. 30 to 32, a slit 320S may be formed on a lateral surface of the body 320 of the bracket 32. A slit 321S may be formed between the first leg 3211 and the second leg 3212. The slit 320S and the slit 321S may be collectively referred to as a slit 32S.

A top connector 33 may include a body 330, a first wing 330L, a second wing 330R, a top housing 331, and a pin hole 332.

The body 330 may have a cylindrical shape. The body 330 may be disposed in a hollow space of the body 320 through the slit 32S of the bracket 32. The body 330 may be caught on the flange 320F of the body 320.

The first wing 330L may extend from a lateral surface of the body 330. The first wing 330L may face a lower side of the first part 321a of the second leg 3212 of the bracket 32. A fastening member Fy such as a screw may pass through a hole 330Lh of the first wing 330L and be coupled to the first part 321a.

The second wing 330R may extend from the lateral surface of the body 330. The second wing 330R may face a lower side of the first part 321a of the fourth leg 3214 of the bracket 32. A fastening member Fy such as a screw may pass through a hole 330Rh of the second wing 330R and be coupled to the first part 321a.

Accordingly, the top connector 33 may be coupled to the bracket 32 that is coupled to the pole 30.

The top housing 331 may protrude downward from the body 330. The pin hole 332 may be formed in the top housing 331. A top groove 331g may be formed on a lateral surface of the top housing 331. The top groove 331g may extend vertically.

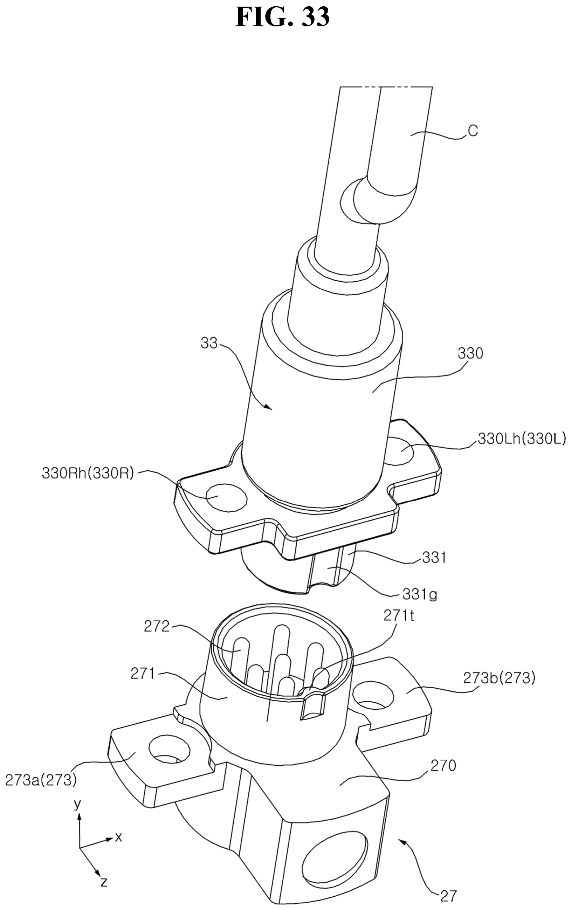

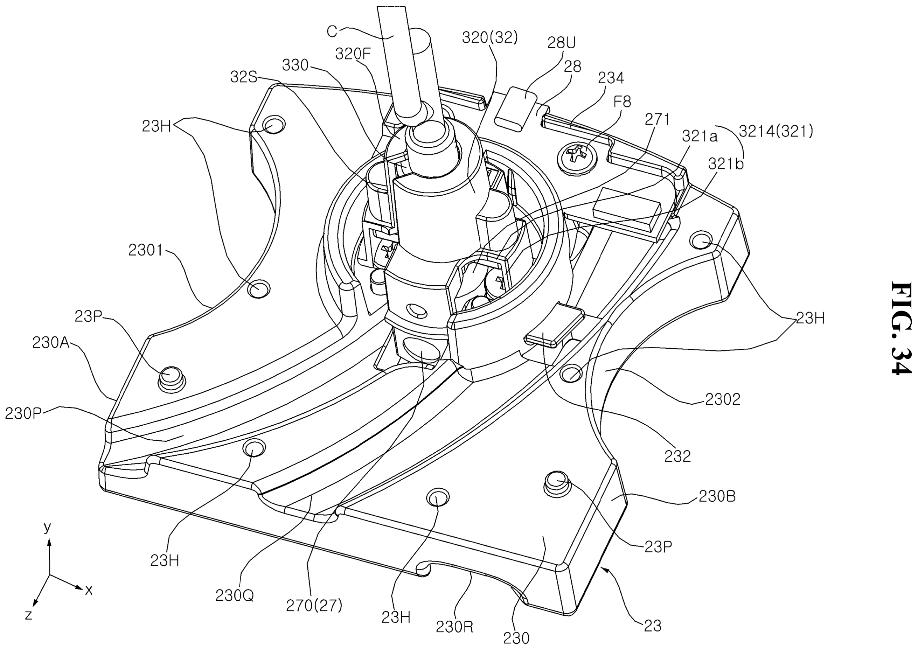

Referring to FIGS. 33 and 34, the bottom connector 27 may include a body 270, a bottom housing 271, and a pin 272. The bottom housing 271 may protrude upward from the body 270. The pin 272 may be disposed within the bottom housing 271. A bottom protrusion 271t may protrude from the inside of the bottom housing 271. The top groove 331g of the top connector 33 may be aligned with the bottom protrusion 271t of the bottom connector 27.

Accordingly, as the insertion portion 30D of the pole 30 is inserted into the hole 25P of the base (see FIGS. 27 and 28), the top housing 331 may be inserted inside the bottom housing 271. The bottom protrusion 271t may be positioned in the top groove 331g. A pin of 272 the bottom connector 27 may be inserted into the pin hole 332 of the top connector 33. Alternatively, a pin may be formed on the top connector 33, and a pin hole into which the pin is inserted may be formed in the bottom connector 27. A cable C electrically connected to the top connector 33 may be electrically connected to the bottom connector 27 through the top connector 33.

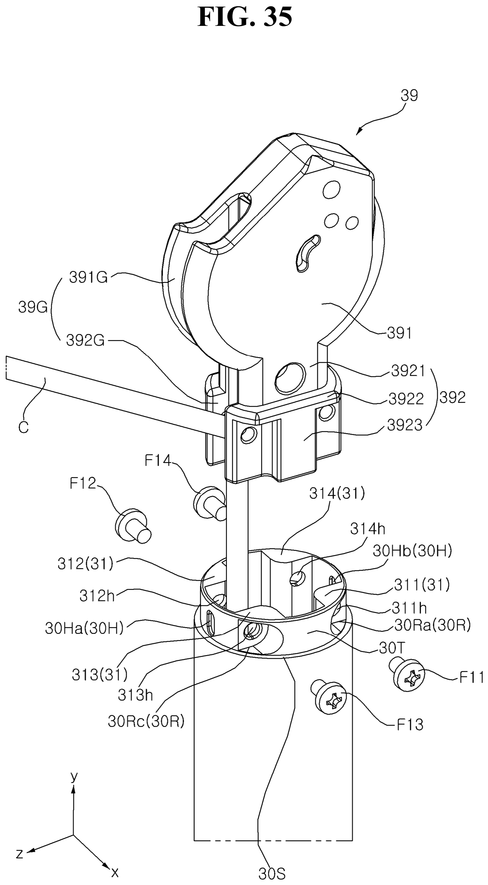

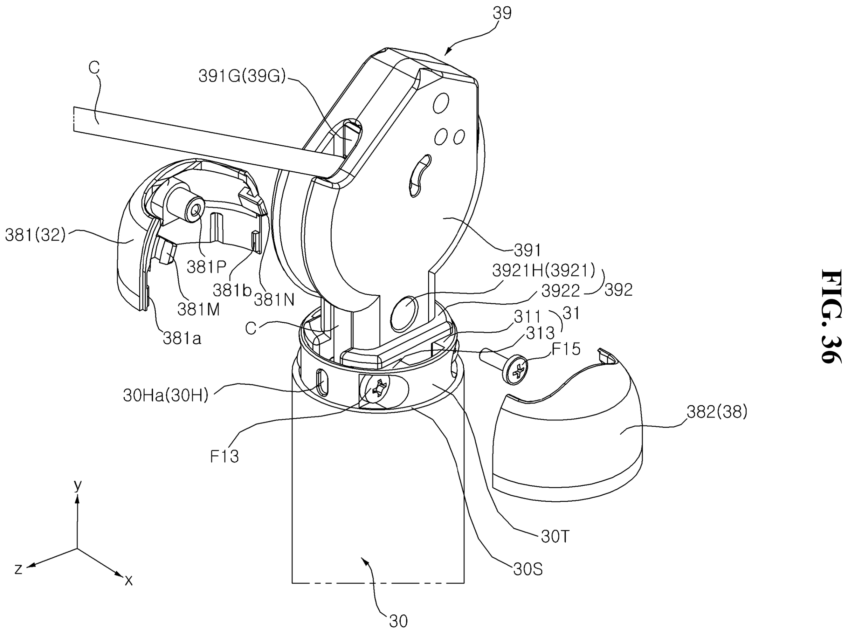

Referring to FIGS. 35 and 36, a top part 30T may define a top of the pole 30. A diameter of the top part 30T may be greater than a diameter of a remaining part of the pole 30. A stepped portion 30S may be formed between the top part 30T and the remaining part of the pole 30.

A recessed portion 30R may be recessed from a lateral surface of the top part 30T toward the rib 31. A first recessed portion 30Ra may be recessed from the lateral surface of the top part 30T toward the first rib 311. A first hole 311h may be formed in a portion of the first rib 311 that corresponds to the first recessed portion 30Ra. A second recessed portion 30Rb may be recessed from the lateral surface of the top part 30T toward the second rib 312. A second hole 312h may be formed in a portion of the second rib 312 that corresponds to the second recessed portion 30Rb. A third recessed portion 30Rc may be recessed from the lateral surface of the top part 30T toward the third rib 313. A third hole 313h may be formed in a portion of the third rib 313 that corresponds to the third recessed portion 30Rc. A fourth recessed portion 30Rd may be recessed from the lateral surface of the top part 30T toward the fourth rib 314. A fourth hole 314h may be formed in a portion of the fourth rib 314 that corresponds to the fourth recessed portion 30Rd.

A coupling hole 30H may be formed in the top part 30T, and may be disposed between the ribs 31. A first coupling hole 30Ha may be disposed between the second rib 312 and the third rib 313. A second coupling hole 30Hb may be disposed between the first rib 311 and the fourth rib 314.

A body 392 of an arm mount 39 may be inserted inside the pole 30. The body 392 may include an upper part 3921, a middle part 3922, and a lower part 3923.

The upper part 3921 may define an upper portion of the body 392, and may be connected to a head 391 of the arm mount 39. The lower part 3923 may define a lower portion of the body 392. The lower part 3923 may have a cross-shaped cross-section. The lower part 3923 may be inserted between the first to fourth ribs 311, 312, 313, 314. The middle part 3922 may be formed between the upper part 3921 and the lower part 3923. A width of the middle part 3922 may be greater than a width of the upper part 3921 and a width of the lower part 3923. The middle part 3922 may be adjacent to upper ends of the ribs 311. The middle part 3922 may be positioned on the ribs 311.

A first fastening member F11 may pass through the first hole 311h and be coupled to the lower part 3923. A second fastening member F12 may pass through the second hole 312h and be coupled to the lower part 3923. A third fastening member F13 may pass through the third hole 313h and be coupled to the lower part 3923. A fourth fastening member F14 may pass through the fourth hole 314h and be coupled to the lower part 3923. The fastening members F11, F12, F13, and F14 may be screws.

Accordingly, the arm mount 39 may be coupled to the pole 30. The cable C may be positioned in the pole 30. A groove 39G may be formed at a front portion of the arm mount 39, and the cable C may be disposed in the groove 39G. The groove 39G may include a first groove 391G formed in the head 391 of the arm mount 39, and a second groove 392G formed in the body 392 of the arm mount 39.

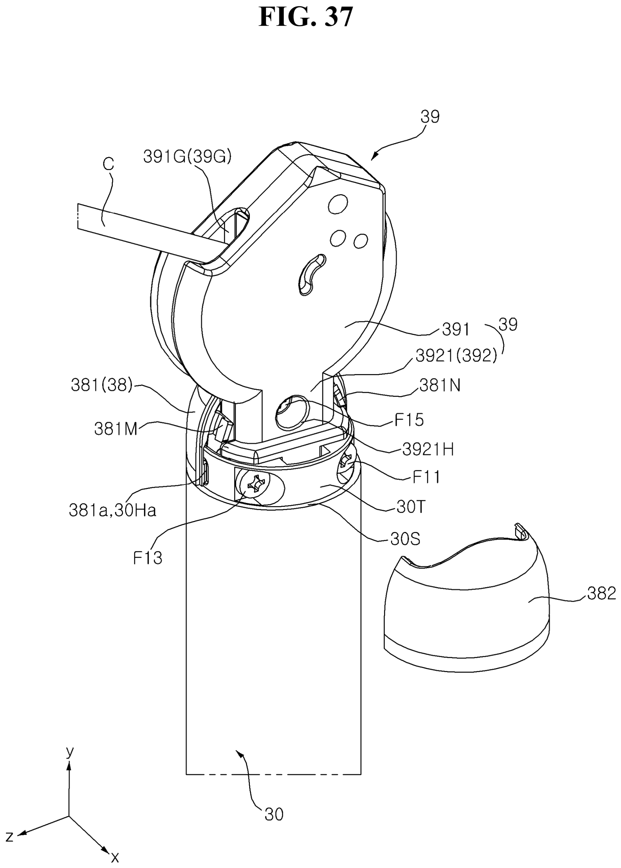

Referring to FIGS. 36 and 37, a cap 38 may include a first body 381 and a second body 382. The first body 381 and the second body 382 may be disposed opposite each other with respect to the top part 30T of the pole 30. The first body 381 may be located on the right side of the top part 30T, and may be convex rightward. The second body 382 may be located on the left side of the top part 30T, and may be convex leftward.

A first protrusion 381a may protrude from an inner surface of the first body 381 while being adjacent to a first edge of the first body 381. A second protrusion 381b may protrude from the inner surface of the first body 381 while being adjacent to a second edge of the first body 381. The first protrusion 381a may be inserted into and coupled to the first coupling hole 30Ha, and the second protrusion 381b may be inserted into and coupled to the second coupling hole 30Hb. Accordingly, the first body 381 may be coupled to the pole 30.

A fixing pin 381P may protrude from the inside of the first body 381. The fixing pin 381P may be inserted into a hole 3921H of the upper part 3921 of the body 392. A fastening member F15 such as a screw may be fastened to the fixing pin 381P through the hole 3921H. Accordingly, the first body 381 may be coupled to the arm mount 39.

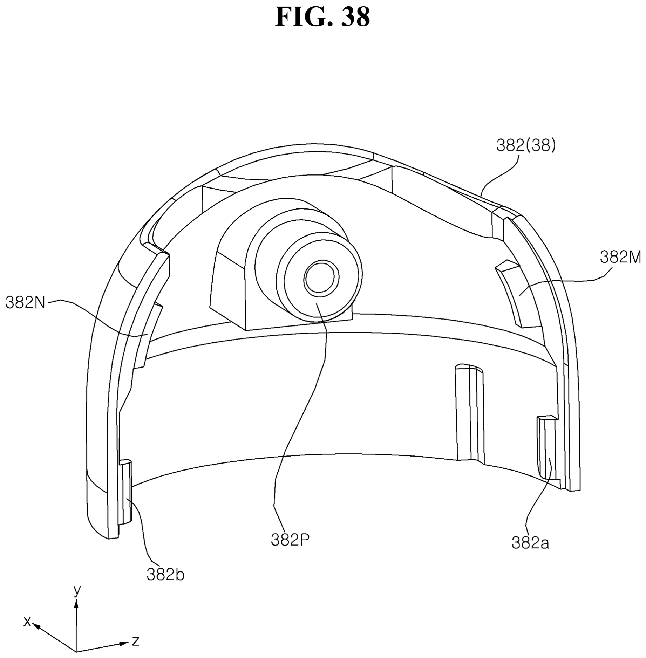

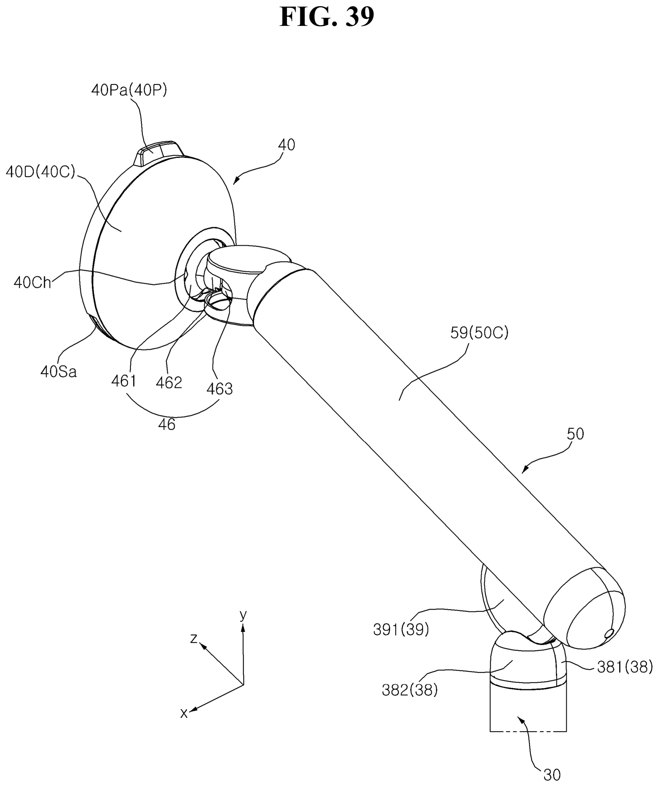

Referring to FIGS. 38 and 39 along with FIGS. 36 and 37, a first protrusion 382a may protrude from an inner surface of the second body 382 while being adjacent to a first edge of the second body 382. A second protrusion 382b may protrude from the inner surface of the second body 382 while being adjacent to a second edge of the second body 382. The first protrusion 382a may be inserted into and coupled to the first coupling hole 30Ha, and the second protrusion 382b may be inserted into and coupled to the second coupling hole 30Hb (see FIG. 35). Accordingly, the second body 382 may be coupled to the pole 30.

A first hook 381M may protrude toward the second body 382 from the first body 381 while being adjacent to the first edge of the first body 381. A second hook 381N may protrude toward the second body 382 from the first body 381 while being adjacent to the second edge of the first body 381. A first coupling protrusion 382M may be formed on the inner surface of the second body 382 to correspond to the first hook 381M, and the first hook 381M may be hooked on the first coupling protrusion 382M. A second coupling protrusion 382N may be formed on the inner surface of the second body 382 to correspond to the second hook 381N, the second hook 381N may be hooked onto the second coupling protrusion 382N. Accordingly, the second body 382 may be coupled to the first body 381.

A guide pin 382P may protrude from the inside of the second body 382. The guide pin 382P may be inserted into the hole 3921H of the upper part 3921 of the body 392. Accordingly, the guide pin 382P and the hole 3921H may guide the coupling of the second body 382 and the first body 381.

The cap 38 coupled to the pole 30 and the arm mount 39 may cover the top part 30T of the pole 30 and the body 392 of the arm mount 39. The cap 38 may be positioned on the stepped portion 30S.

The support arm 50 may be coupled to the arm mount 39. The support arm 50 may extend in a direction intersecting the pole 30. A holder 46 of the connector 40 may be coupled to an end of the support arm 50. The connector 40 may be coupled to a mount 15M (see FIG. 2) of the back cover 15 of the display 10. The cable C (see FIG. 37) may be disposed along the pole 30, the support arm 50, and the connector 40, and may be electrically connected to the display 10.

For example, the cable C may be electrically connected to a battery (not shown). The cable C may provide power to the battery of the display 10. In this case, when the display 10 is coupled to the connector 40, the battery of the display 10 may be charged. The display 10 separated from the connector 40 may be driven by power from the battery of the display 10.

Referring to FIGS. 1 to 39, a display device 1 may include: a display panel 11; and a stand S including a base 20 and configured to support the display panel 11. The base 20 may include: a case 20C; a first plate 21 disposed within the case 20C. The base 20 may include a substrate 20P positioned at the first plate 21. The base 20 may include a second plate 22 positioned inside the case 20C and covering the substrate 22. The base 20 may include a bracket 23 positioned inside a slot of the first plate 21. The base 20 may include a wheel assembly 26 coupled to the first plate 21 and configured to move the case 20C.

The case 20C may include: a supporter 243 recessed from a bottom of the case 20C. The first plate 21 may include a wheel mount 211 recessed from a bottom of the first plate 21 and positioned on the supporter 243. The wheel assembly 26 may be coupled to the wheel mount 211 through a hole 243c of the supporter 243.

The wheel mount 211 may have a side wall extending along a lateral surface of the supporter 243.

The wheel mount 211 may include a plurality of wheel mounts 2111, 2112, 2113, 2114, 2115 arranged along an edge of the case 20C.

The first plate 21 may include a body 210 on which the wheel mount 211 is formed; and a groove 210G recessed from a lateral side of the body 210.

The base 20 may further include a substrate 20P disposed within the case 20C. The first plate 21' may include: a body 210; and a recessed portion 210H' recessed from an upper surface of the body 210 and in which the substrate 20P is positioned.

The base 20 may further include a plate 22 positioned on the body 210 and covering the substrate 20P.

The base 20 may further include a substrate disposed within the case 20C. The first plate 21 may include a body 210; and a hole 210H formed in the body 210 and covered by the substrate 20P.

The base 20 may further include a plate 22 positioned on the body 210 and covering the substrate 20P.

The case 20C may include a bottom part 241 defining a bottom of the case 20C and at which the first plate 21 is positioned. The base 20 may further include a bracket 23 disposed between the first plate 21 and the bottom part 241.

The base 20 may further include a bottom connector 27 mounted on the bracket 23. The bracket 23 may include a first cable path 230P recessed from an upper surface of the bracket 23 and having one end adjacent to the bottom connector 27.

The base 20 may further include a substrate 28 mounted on the bracket 23. The bracket 23 may include a second cable path 230Q recessed from an upper surface of the bracket 23, and having one end adjacent to the substrate 28.

The base 20 may further include a socket 29 mounted on a side surface of the bracket 23. The bracket 23 may include a third cable path 230R recessed from a lower surface of the bracket 23 and having one end adjacent to the socket 29.

The first plate 21 may include a slot 210S in which the bracket 23 is positioned.

The stand S may further include a pole 30 that extends in a direction intersecting the base 20. The base 20 may include: a bottom bracket 23 coupled to the first plate 21; and a bottom connector 27 mounted on the bottom bracket 23. The pole 30 may include: a top bracket 32 coupled to an inside of the pole 30; and a top connector 33 coupled to the top bracket 32. The top connector 33 may be electrically connected to the bottom connector 27 when the pole 30 is connected to the base 20.

The top bracket 32 may include: a body 320 in a hollow cylindrical shape; and a slit 32S formed on a lateral surface of the body 320. The top connector 33 may be inserted into a hollow space of the body 320.

The display device according to the present disclosure has the following effects.

According to at least one of the embodiments of the present disclosure, it is possible to provide a display device including a stand for supporting a display.

According to at least one of the embodiments of the present disclosure, it is possible to provide a structure of a base of a stand.

According to at least one of the embodiments of the present disclosure, it is possible to provide a structure for protecting a substrate of a base from external impact.

According to at least one of the embodiments of the present disclosure, it is possible to provide a structure for minimizing Electromagnetic Interference (EMI) of a substrate of a base.

According to at least one of the embodiments of the present disclosure, it is possible to provide a coupling structure of a pole of a stand and a base.

According to at least one of the embodiments of the present disclosure, it is possible to provide a coupling structure of a top connector of a pole and a bottom connector of a base.

According to at least one of the embodiments of the present disclosure, it is possible to provide a cable routing structure of a bracket on which a bottom connector is mounted.

According to at least one of the embodiments of the present disclosure, it is possible to provide a coupling structure of a top connector and a top bracket.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. A display device (1) comprising:
a display (10); and
a stand (S) including a base (20) and a pole (30) which is coupled to the base (20), and supporting the display (10),
wherein the base (20) comprises:
a case (20C);
a first plate (21) positioned inside the case (20C) and including a slot (210S);
a substrate (20P) positioned at the first plate (21); and
a second plate (22) positioned inside the case (20C) and covering the substrate (20P).

2. The display device (1) of claim 1, wherein the second plate (22) comprises:
a body (221);
a rim (222) extending along an edge of the body (221); and
a guide pin (22P) protruding from a lower side of the rim (222).

3. The display device (1) of claim 2, wherein the first plate (21) comprises:
a body (210); and
a recessed portion (210H') recessed from an upper side of the body (210) and forming an accommodation space (21S) in which the substrate (20P) is positioned.

4. The display device (1) of claim 2, wherein the first plate (21) comprises:
a body (210); and
a hole (210H) formed at the body (210) and covered by the substrate (20P).

5. The display device (1) of claim 3 or 4, wherein the guide pin (22P) is inserted into a guide hole (210U) of the body (210) of the first plate (21), and guides a coupling of the second plate (22) and the first plate (21).

6. The display device (1) of claim 1, wherein the base (20) further comprises a bracket (23) positioned in the slot (210S) of the first plate (21).

7. The display device (1) of any one of claims 1 to 6, wherein the base (20) further comprises a wheel assembly (26) coupled to the first plate (21) and moving the case (20C).

8. The display device (1) of claim 6, wherein the first plate comprises:
a body (210);
a cover portion (21C) formed at the body (210) and forming an upper side of the slot (210S); and
a groove (21G) formed from an edge of the cover potion (21C) toward an inside of the cover portion (21C).

9. The display device (1) of claim 8, wherein the bracket (23) comprises:
a body (230); and
a wall (231) protruding from an upper side of the body (230).

10. The display device (1) of claim 9, wherein the cover portion (21C) covers the body (230) of the bracket (23), and
wherein the wall (231) is inserted into the groove (21G) of the first plate (21).

11. The display device (1) of claim 8, wherein the second plate (22) is positioned on the body (210) of the first plate (21).

12. The display device (1) of claim 7, wherein the case (20C) comprises a supporter (243) recessed from a bottom of the case (20C),
wherein the first plate (21) comprises a wheel mount (211) recessed from a bottom of the first plate (21) and positioned on the supporter (243), and
wherein the wheel assembly (26) is coupled to the wheel mount (211) through a hole (243c) of the supporter (243).

13. The display device (1) of claim 12, wherein the wheel mount (211) has a side wall extending along a lateral surface of the supporter (243).

14. The display device (1) of claim 12 or 13, wherein the wheel mount (211) comprises a plurality of wheel mounts (2111, 2112, 2113, 2114, 2115) arranged along an edge of the case (20C).

15. The display device (1) of claim 6, wherein the case (20C) comprises a bottom part (241) forming a bottom of the case (20C) and at which the first plate (21) is positioned, and
wherein the bracket (23) is disposed between the slot (210S) and the bottom part (241).
